# EUROPEAN PATENT APPLICATION

(11) **EP 2 738 781 A1**
(43) Date of publication of application: **04.06.2014**
(21) Application number: 12817299.6
(22) Date of filing: 26.07.2012
(51) Int. Cl.: H01G 7/02, B32B 7/02, B32B 27/30

(54) **ELECTRET AND METHOD FOR MANUFACTURING SAME, AND ELECTROSTATIC INDUCTION TYPE CONVERSION ELEMENT**

(30) Priority: 28.07.2011 JP 2011165334
(71) Applicant: Asahi Glass Company, Limited, Tokyo 100-8405 (JP)
(72) Inventor: NAKAYAMA, Fumiko, Tokyo 100-8405 (JP); KASHIWAGI, Kimiaki, Tokyo 100-8405 (JP)
(74) Representative: Müller-Boré & Partner Patentanwälte PartG mbB
(86) International application number: PCT/JP2012/069036
(87) International publication number: WO 2013/015385

(57) **Abstract**

To provide an electret that produces a high charge density and that maintains a good stability of the charge density under a high temperature and high humidity condition, and an electrostatic induction-type conversion device provided with such an electret. An electret having an electric charge injected to a laminate having a resin layer (A) and a resin layer (B) laminated directly on the resin layer (A), wherein the resin layer (A) contains a reaction product of a fluorinated polymer with a silane coupling agent, the resin layer (B) does not contain a reaction product of a fluorinated polymer with a silane coupling agent and contains a fluorinated polymer, the resin layer (B) is disposed as the outermost layer so as to be in contact with air, and the total thickness of the resin layer (B) is from 5 to 55% of the total thickness of the resin layer (A); and an electrostatic induction-type conversion device provided with the electret.

## Description

### TECHNICAL FIELD

The present invention relates to an electret and a process for its production, and an electrostatic induction-type conversion device.

### BACKGROUND ART

An electret having an electric charge injected to an insulating material is used in an electrostatic induction-type conversion device such as a power-generating unit or a microphone. As the electrostatic induction-type conversion device, for example, an electrostatic induction-type conversion device is known which has an electret having an electric charge injected to a resin layer formed of e.g. an ethylene/tetrafluoroethylene copolymer or a fluorinated polymer having an alicyclic structure in its main chain.

For example, an electrostatic induction-type conversion device is known which has an electret having an electric charge injected to a resin layer made of a composition comprising a fluorinated polymer having an alicyclic structure in its main chain, and a silane coupling agent (Patent Document 1). Such an electrostatic induction-type conversion device produces a high charge density.

Recently, an electrostatic induction-type conversion device has been used also in an application wherein it is used or installed in a high temperature and high humidity condition such as in automobiles, roadway sensors, etc. In such an application, not only the production of a high charge density, but also stability of the charge density under a high temperature and high humidity condition is required.

As an electrostatic induction-type conversion device having a moisture-proof property improved, for example, an electrostatic induction-type conversion device is known which has an electret having a moisture-proof layer made of polyparaxylylene laminated on a resin layer made of a fluorinated polymer having an alicyclic structure in its main chain (Patent Document 2).

### PRIOR ART DOCUMENTS

### PATENT DOCUMENTS

Paten Document 1: JP-A-2008-266563
Paten Document 2: JP-A-2006-180450

### DISCLOSURE OF INVENTION

### TECHNICAL PROBLEM

According to a finding by the present inventors, with the electrostatic induction-type conversion device disclosed in Patent Document 1, it is difficult for the electret to maintain a high electric charge density constantly under a high temperature and high humidity condition, and the electric charge tends to be discharged as the time passes.

Whereas, with the electrostatic induction-type conversion device disclosed in Patent Document 2, the adhesion between the resin layer made of a fluorinated polymer and the moisture-proof layer made of polyparaxylylene in the electret, is inadequate. Therefore, moisture is likely to penetrate between the layers of the electret, whereby it is difficult to maintain an electric charge constantly. If surface treatment is applied to the surface of the resin layer made of the fluorinated polymer, it is possible to increase the adhesion between the resin layer made of a fluorinated polymer and the moisture-proof layer made of polyparaxylylene. However, if such surface treatment is applied, the resin layer made of the fluorinated polymer will be modified, and the charge-retention performance will be lowered.

It is an object of the present invention to provide an electret that produces a high charge density and that maintains a good stability of the charge density under a high temperature and high humidity condition, and a process for its production, as well as an electrostatic induction-type conversion device provided with such an electret.

### SOLUTION TO PROBLEM

The present invention provides the following [1] to [15].
[1] An electret having an electric charge injected to a laminate having a resin layer (A) and a resin layer (B) laminated directly on the resin layer (A), wherein
   the resin layer (A) contains a reaction product of a fluorinated polymer with a silane coupling agent,
   the resin layer (B) does not contain a reaction product of a fluorinated polymer with a silane coupling agent and contains a fluorinated polymer,
   the resin layer (B) is disposed as the outermost layer so as to be in contact with air, and
   the total thickness of the resin layer (B) is from 5 to 55% of the total thickness of the resin layer (A).
[2] The electret according to [1], wherein the silane coupling agent is a silane coupling agent having an amino group.
[3] The electret according to [1] or [2], wherein the silane coupling agent is at least one member selected from the group consisting of γ-aminopropylmethyldiethoxysilane, γ-aminopropylmethyldimethoxysilane, N-(β-aminoethyl)-γ-aminopropylmethyldimethoxysilane, N-(β-aminoethyl)-γ-aminopropylmethyldiethoxysilane, γ-aminopropyltrimethoxysilane, γ-aminopropyltriethoxysilane, N-(β-aminoethyl)-γ-aminopropyltrimethoxysilane, N-(β-aminoethyl)-γ-aminopropyltriethoxysilane and aminophenyltrimethoxysilane.
[4] The electret according to any one of [1] to [3], wherein the fluorinated polymer to form the reaction product contained in the resin layer (A) is a fluorinated polymer having at least one member selected from the group consisting of a carboxy group and its salt (-COOM¹, wherein M¹ is a metal atom or atomic group capable of forming a salt with a carboxy group), an alkoxycarbonyl group, an acid anhydride group formed by dehydration condensation of two carboxy groups in one molecule, and an acyl group.
[5] The electret according to any one of [1] to [4], wherein the fluorinated polymer to form the reaction product contained in the resin layer (A) is a fluorinated polymer having an alicyclic structure in its main chain.
[6] The electret according to any one of [1] to [5], wherein the fluorinated polymer contained in the resin layer (B) is a fluorinated polymer having an alicyclic structure in its main chain.
[7] The electret according to any one of [1] to [6], wherein the fluorinated polymer to form the reaction product contained in the resin layer (A) and the fluorinated polymer contained in the resin layer (B) are the same type of fluorinated polymer.
[8] A process for producing an electret comprising the following steps (X1) to (X5):
   (X1) a step of applying a coating fluid containing a fluorinated polymer, a silane coupling agent and a solvent onto a substrate to form a coating film (A1), followed by predrying,
   (X2) a step of baking the predried coating film (A1) to form a resin layer (A),
   (X3) a step of applying a coating fluid not containing a silane coupling agent and containing a fluorinated polymer and a solvent onto the resin layer (A) to form a coating film (B1), followed by predrying,
   (X4) a step of baking the predried coating film (B1) to form a resin layer (B) thereby to form a laminate having the resin layer (A) and the resin layer (B) directly laminated on the substrate, and
   (X5) a step of injecting an electric charge to the laminate.
[9] The process for producing an electret according to [8], wherein the silane coupling agent is a silane coupling agent having an amino group.
[10] The process for producing an electret according to [8] or [9], wherein the fluorinated polymer to be used in the step (X1) is a fluorinated polymer having at least one member selected from the group consisting of a carboxy group and its salt (-COOM¹, wherein M¹ is a metal atom or atomic group capable of forming a salt with a carboxy group), an alkoxycarbonyl group, an acid anhydride group formed by dehydration condensation of two carboxy groups in one molecule, and an acyl group.
[11] The process for producing an electret according to any one of [8] to [10], wherein the fluorinated polymer to be used in the step (X1) is a fluorinated polymer having an alicyclic structure in its main chain.
[12] The process for producing an electret according to any one of [8] to [11], wherein the fluorinated polymer to be used in the step (X1) and the fluorinated polymer to be used in the step (X3) are the same type of fluorinated polymer.
[13] The process for producing an electret according to any one of [8] to [12], wherein in the step (X1), the proportion of the silane coupling agent to the total amount of the fluorinated polymer and the silane coupling agent, is from 0.1 to 20 mass%.
[14] The process for producing an electret according to any one of [8] to [13], wherein the solvent to be used in the step (X3) is a fluorinated organic solvent having a surface tension of at most 20 mN/m.
[15] An electrostatic induction-type conversion device provided with the electret as defined in any one of [1] to [7].

### ADVANTAGEOUS EFFECTS OF INVENTION

The electret of the present invention produces a high charge density, and the stability of the charge density under a high temperature and humidity condition is good.

According to the process for producing an electret of the present invention, it is possible to obtain an electret that produces a high charge density and that maintains a good stability of the charge density under a high temperature and high humidity condition.

The electrostatic induction-type conversion device of the present invention is provided with the electret that produces a high charge density and that maintains a good stability of the charge density under a high temperature and high humidity condition.

### BRIEF DESCRIPTION OF DRAWINGS

Fig. 1 is a cross-sectional view illustrating one embodiment of the electret of the present invention.
Fig. 2 is a perspective view illustrating one embodiment of the electrostatic induction-type conversion device of the present invention.
Fig. 3 is a schematic diagram illustrating a corona charging equipment used for injection of an electric charge.
Fig. 4 is a diagram showing measuring points of the surface potentials of an electret.

### DESCRIPTION OF EMBODIMENTS

In this specification, repeating units derived from a monomer, formed by polymerization of the monomer, may be referred to simply as "units". The units may be units formed directly by a polymerization reaction, or units having a part of such units converted to another structure by treatment of the polymer. In this specification, a "monomer" means a compound having a polymerizable reactive carbon-carbon double bond.

In this specification, a "side chain" is, in a polymer wherein repeating units constitute its main chain, a group other than a hydrogen atom and a halogen atom, which is bonded to a carbon atom constituting the main chain.

In this specification, a compound represented by the formula (1) will be referred to as a "compound (1)", and a compound represented by another formula will be likewise referred to in a similar manner. Further, a unit represented by the formula (3-1) will be referred to as a "unit (3-1)", and a unit represented by another formula will be likewise referred to in a similar manner.

### [Electret]

The electret of the present invention is an electret having an electric charge injected to a laminate having a resin layer (A) and a resin layer (B) laminated directly on the resin layer (A), wherein the resin layer (B) is disposed as the outermost layer so as to be in contact with air, and the total thickness of the resin layer (B) is from 5 to 55% of the total thickness of the resin layer (A). That is, in the electret of the present invention, during its production or its use, on one side of the resin layer (A), various substrates, various resin layers, etc. are disposed, and on the other side of the resin layer (A), the resin layer (B) is disposed as the outermost layer in contact with air.

Resin layer (A): a resin layer containing a reaction product of a fluorinated polymer (hereinafter referred to also as a "fluorinated polymer (a1)") with a silane coupling agent (hereinafter referred to also as a "silane coupling agent (a2)").

Resin layer (B): a resin layer not containing a reaction product of a fluorinated polymer (hereinafter referred to also as a "fluorinated polymer (b1)") with a silane coupling agent (hereinafter referred to also as a "silane coupling agent (b2)") and containing a fluorinated polymer (b1).

The electret of the present invention contains the resin layer (A), whereby it is possible to make the charge density high. The resin layer (A) contains a reaction product of a fluorinated polymer and a silane coupling agent, whereby the charge density of the electret is made high, and the surface potential is increased. The mechanism whereby the charge density is made high, is considered to be as follows.

When an electric charge is injected to the laminate of the resin layer (A) and the resin layer (B), a portion derived from the silane coupling agent in the reaction product in the resin layer (A) polarizes, whereby a nanocluster structure will be formed. Such a nanocluster structure will function as a site to store the electric charge injected to the resin layer (A).

Further, in the electret of the present invention, on the air side of the resin layer (A), the resin layer (B) not containing a reaction product of a fluorinated polymer and a silane coupling agent and containing a fluorinated polymer is laminated directly as the outermost layer, whereby the electret has an excellent moisture-proof property and is able to maintain the electric charge constantly even under a high temperature and high humidity condition. The mechanism whereby the moisture-proof property is improved, is considered to be as follows.

The silane coupling agent has a characteristic to readily absorb water as compared with the fluorinated polymer, due to an influence of a -SiOR group, an amino group, an epoxy group, etc. in its molecule. Therefore, the resin layer (B) not containing a reaction product of the fluorinated polymer (b1) and the coupling agent (b2) is less water-absorptive than the resin layer (A) without an influence of a -SiOR group, an amino group, an epoxy group, etc. Further, the fluorinated polymer (b1) has a large electronegativity and a small intermolecular force, and accordingly, the resin layer (B) containing the fluorinated polymer (b1) has a high water repellent effect and is excellent in hydrophobicity. By directly laminating the resin layer (B) having such characteristics on the air side of the resin layer (A), water-absorption from the air side of the resin layer (A) is suppressed. Further, both the resin layer (A) and the resin layer (B) contain fluorinated polymers, whereby their interlayer affinity is good, and excellent adhesion is obtainable. Therefore, interfacial delamination between the resin layer (A) and the resin layer (B) is suppressed, whereby penetration of moisture between the layers of the resin layer (A) and the resin layer (B) is also suppressed.

Further, in the electret of the present invention, the total thickness of the resin layer (B) is from 5 to 55% of the total thickness of the resin layer (A). From 10 to 45% is preferred, and from 15 to 40% is particularly preferred. When the proportion of the total thickness of the resin layer (A) is large, the charge density is high, but the moisture-proof property is not high. When the proportion of the resin layer (B) is large, the moisture-proof property is improved, but the charge density itself is not high. By adjusting the total thickness of the resin layer (B) to be from 5 to 55% of the total thickness of the resin layer (A), a high charge density and a high moisture-proof can both be satisfied. Here, the total thickness means that when two or more resin layers of the same type are present, the thickness is their total thickness.

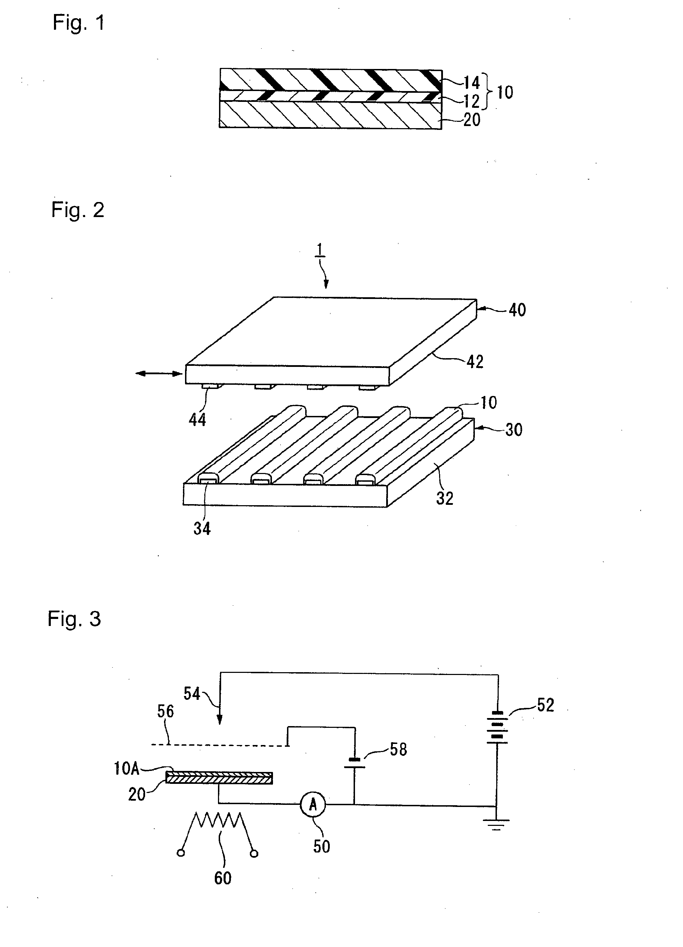

Fig. 1 is a cross-sectional view illustrating an embodiment of the electret of the present invention.

As shown in Fig. 1, the electret 10 has an electric charge injected to a laminate of the resin layer (A) 12 and the resin layer (B) 14 laminated directly thereon, and on the resin layer (A) 12 side, a substrate 20 is placed. That is, in the electret 10, on the air side of the resin layer (A), the resin layer (B) 14 is placed as the outermost layer in contact with air.

The thickness of the electret 10 is preferably from 1 to 200 µm, more preferably from 6 to 32 µm, particularly preferably from 5 to 20 µm. When the thickness of the electret 10 is at least the lower limit value in the above range, the power generation output will be readily obtainable. When the thickness of the electret 10 is at most the upper limit value within the above range, the production of the laminate will be easy.

The thickness of the resin layer (A) 12 is preferably from 5 to 30 µm, particularly preferably from 5 to 25 µm. When the thickness of the resin layer (A) 12 is at least the lower limit value within the above range, a high charge density will be easily produced. When the thickness of the resin layer (A) 12 is at most the upper limit value within the above range, uniformity of the thickness will be excellent.

The thickness of the resin layer (B) 14 is preferably from 0.1 to 10 µm, particularly preferably from 1 to 7 µm. When the thickness of the resin layer (B) 14 is at least the lower limit value within the above range, the moisture-proof property will be improved, and injection of an electric charge to the laminate of the resin layer (A) 12 and the resin layer (B) 14 can be carried out more uniformly. When the thickness of the resin layer (B) 14 is at most the upper limit value within the above range, uniformity of the thickness will be excellent, and a high charge density will be produced.

The substrate 20 may, for example, be a substrate (1) made of a material which can be connected to an earth at the time of injecting an electric charge, a substrate (2) having an electrically conductive metal film formed on the surface of a substrate made of an insulating material, or a substrate (3) made of an insulating material. In the case of the substrate (3), at the time of injecting an electric charge, the laminate of the resin layer (A) 12 and the resin layer (B) 14 may be replaced on the substrate (1) or (2).

The substrate (1) may, for example, be a substrate made of an electrically conductive metal such as gold, platinum, copper, aluminum, chromium, nickel or the like, or a substrate made of a semiconductor material having a low resistance value.

The substrate (2) may, for example, be a substrate having an electrically conductive metal film formed on the surface of an insulating material e.g. an inorganic material such as glass or an organic polymer material such as polyethylene terephthalate, polyimide, polycarbonate or an acrylic resin by a method such as sputtering, vapor deposition or wet coating, or a substrate having such a metal film formed on a semiconductor material such as silicon.

In the substrate (1) or (2), the resistance value of the portion which can be connected to an earth is preferably at most 0.1 Ω·cm, particularly preferably at most 0.01 Ω·cm by volume resistivity value.

The substrate (3) may, for example, be a substrate made of an insulating material mentioned for the substrate (2).

The substrate 20 may be a flat plate having a smooth surface, a flat plate having unevenness formed on its surface, or a flat plate patterned in various shapes.

Further, in a case where the substrate 20 is the above substrate (2) and has a patterned metal film, patterned unevenness may be formed on the surface of the insulating material, and the metal film may be formed on the uneven surface, or the patterned metal film may be formed directly on the surface of the insulating material.

Further, in the case of the substrate (2) having a metal film having unevenness, unevenness may be formed on the surface of the insulating material and on the formed unevenness, the metal film may be formed, or the metal film having unevenness may be formed directly on the surface of the insulating material.

The method for forming a metal film having unevenness or a patterned metal film is not particularly limited, and a conventional method may be used. As the method for forming a metal film having unevenness or a patterned metal film, either a vacuum process or a wet process may be used. The vacuum process may, for example, be a sputtering method via a mask, or a vapor deposition method via a mask. The wet process may, for example, be a roll coater method, a casting method, a dipping method, a spin coating method, a casting-on-water method, a Langmuir-Blodgett method, a die coating method, an ink jet method or a spray coating method. Further, a printing technique such as a relief printing method, a gravure printing method, a lithographic printing method, a screen printing method or a flexographic printing method may also be employed. Further, in a case where a metal film having a fine unevenness or pattern is to be formed, a nanoimprinting method or a photolithography method may, for example, be employed.

To the surface of the substrate 20, surface treatment may be applied for the purpose of e.g. improving the adhesion between the substrate 20 and the resin layer (A) 12. The surface treatment method may, for example, be a method of applying e.g. polyethyleneimine to the substrate surface, a method of physically treating the surface by e.g. sandblasting, or a method of chemically treating the surface by e.g. corona discharge.

Further, the electret of the present invention is not limited to the mode illustrated in Fig. 1. For example, it may be an electret having an electric charge injected to a laminate having a resin layer (B), a resin layer (A) and a resin layer (B) laminated in this order directly on a substrate, or an electret having an electric charge injected to a laminate having another layer (C) other than a resin layer (A) and a resin layer (B), a resin layer (A) and a resin layer (B) laminated in this order directly on a substrate. As such another layer (C), a coloring layer or an anti-fouling layer may, for example, be mentioned.

### [Resin layer (A)]

The resin layer (A) in the present invention is a resin layer containing a reaction product of a fluorinated polymer (a1) and a silane coupling agent (a2). In a composition containing a fluorinated polymer (a1) and a silane coupling agent (a2), by thermal treatment, a reactive functional group of the fluorinated polymer (a1) and a reactive functional group of the silane coupling agent (a2) will be reacted, so that the fluorinated polymer (a1) and the silane coupling agent (a2) will be bonded to each other. Then, the silane coupling agents (a2) are bonded to one another by a condensation reaction, whereby a reaction product of the fluorinated polymer (a1) and the silane coupling agent will be obtained. Such reactions may be confirmed by an analysis of an infrared spectrum (hereinafter referred to also as an "IR spectrum"). Further, an unreacted fluorinated polymer (a1) or silane coupling agent (a2) may be contained in the resin layer (A).

### (Fluorinated polymer (a1))

The fluorinated polymer (a1) may, for example, be a fluorinated polymer having an alicyclic structure in its main chain (hereinafter referred to as a "fluorinated polymer (a11)"), an ethylene/tetrafluoroethylene copolymer (ETFE), polytetrafluoroethylene (PTFE) or a tetrafluoroethylene/hexafluoroethylene copolymer (FEP).

As the fluorinated polymer (a1), the fluorinated polymer (a11) or ETFE is preferred, and the fluorinated polymer (a11) is particularly preferred, since a higher charge density is thereby produced.

Further, the fluorinated polymer (a1) preferably has a reactive functional group. The reactive functional group means a group having a reactivity to form a bond by a reaction between molecules of the fluorinated polymer (a1) or by a reaction with the silane coupling agent (a2) incorporated together with the fluorinated polymer (a1) when it is heated.

The fluorinated polymer (a1) may have a reactive functional group at a terminal of its main chain, may have a reactive functional group at a terminal of its side chain, or may have a reactive functional group at each of a terminal of its main chain and a terminal of its side chain. It is particularly preferred that the fluorinated polymer (a1) has a reactive functional group at a terminal of its main chain, since the production is thereby easy.

The reactive functional groups may, for example, be a carboxy group and its salt (-COOM¹, wherein M¹ is a metal atom or atomic group capable of forming a salt with a carboxy group), an alkoxycarbonyl group, an acid anhydride group formed by dehydration condensation of two carboxy groups in one molecule, a hydroxy group, a sulfo group and its salt (-SO₃M², wherein M² is a metal atom or atomic group capable of forming a salt with a sulfo group), an epoxy group, a cyano group, a carbonate group, an isocyanate group, an amido group, an aldehyde group, an amino group, a hydrolyzable silyl group, a carbon-carbon double bond, an alkoxy group, and an acyl group.

The hydrolyzable silyl group is a group having an alkoxy group, an amino group, a halogen atom, etc. bonded to a silicon atom, and it is a group capable of cross-linking by forming a siloxane bond by hydrolysis.

The alkoxycarbonyl group may, for example, be a methoxycarbonyl group, an ethoxycarbonyl group, a propoxycarbonyl group, an isopropoxycarbonyl group, a butoxycarbonyl group or a tert-butoxycarbonyl group. Among them, a methoxycarbonyl group or an ethoxycarbonyl group is preferred.

The reactive functional group is preferably at least one member selected from the group consisting of a carboxy group and its salt (-COOM¹, wherein M¹ is a metal atom or atomic group capable of forming a salt with a carboxy group), an alkoxycarbonyl group, an acid anhydride group formed by dehydration condensation of two carboxy groups in one molecule, and an acyl group, from the viewpoint of the reactivity with a reactive functional group of the silane coupling agent (a2). Particularly preferred is a carboxy group or an alkoxycarbonyl group.

The reactive functional group of the fluorinated polymer (a1) may be of one type or of two or more types. The type or content of the reactive functional group may suitably be selected depending upon e.g. the type of the silane coupling agent (a2), the reactive functional group of the silane coupling agent (a2), the application of the electret, the characteristics required for the electret, the method of introducing a reactive functional group to the fluorinated polymer (a1), etc.

The following methods (i) to (iv) may be mentioned as methods for introducing a reactive functional group.
(i) Polymerization is carried out by means of a polymerization initiator, and an unstable terminal group thereby formed, is decomposed by e.g. thermal treatment to form a carbonyl fluoride group (-CF=O group) at a terminal, followed by post-treatment to introduce a reactive functional group to the terminal of the main chain. Specifically, the carbonyl fluoride group may be converted to a carboxy group by hydrolysis. Further, by reacting an alcohol, it may be converted to an alkoxy carbonyl group.
(ii) A reactive functional group may be introduced to a terminal of a side chain by copolymerizing a monomer having the reactive functional group to the side chain.
(iii) A reactive functional group may be introduced to a terminal of a main chain by using a polymerization initiator, a chain extender or the like having the reactive functional group at the time of polymerization.
(iv) A compound (grafting compound) having a reactive functional group and a functional group (such as an unsaturated bond) capable of being grafted, is grafted to a fluorinated polymer.

Two or more of the methods (i) to (iv) may be used in combination.

In a case where a carboxy group or an alkoxycarbonyl group is to be introduced to the fluorinated polymer (a1), as the introduction method, the method (i) is preferred.

### <Fluorinated polymer (a11)>

The "alicyclic structure" in the fluorinated polymer (a11) means a cyclic structure having no aromaticity. Further, "having an alicyclic structure in its main chain" means that at least one among carbon atoms constituting the cyclic structure is a carbon atom constituting the main chain of the fluorinated polymer.

The alicyclic structure may be a cyclic structure wherein the cyclic skeleton is constituted solely by carbon atoms, or may be a heterocyclic structure containing a hetero atom such as an oxygen atom, a nitrogen atom or the like in addition to carbon atoms.

For example, it may be a saturated or unsaturated hydrocarbon cyclic structure which may have a substituent, or a heterocyclic structure having a part of carbon atoms in such a hydrocarbon cyclic structure substituted by a hetero atom such as an oxygen atom, a nitrogen atom or the like.

With a view to improvement of the charge density, the alicyclic structure is preferably an alicyclic structure of a heterocyclic structure having an etheric oxygen atom in the cyclic skeleton, particularly preferably an alicyclic structure of a heterocyclic structure having 1 or 2 etheric oxygen atoms in the cyclic skeleton.

The number of atoms to constitute the cyclic skeleton of the alicyclic structure is preferably from 4 to 7, particularly preferably from 5 to 6. That is, the alicyclic structure is preferably a 4- to 7-membered ring, particularly preferably a 5- or 6-membered ring.

Among carbon atoms constituting the alicyclic structure, the carbon atoms constituting the main chain are derived from a polymerizable double bond of a monomer used for the polymerization for the fluorinated polymer (a11).

For example, in a case where the fluorinated polymer (a11) is a fluorinated polymer obtained by polymerizing the after-mentioned cyclic monomer, the two carbon atoms constituting such a double bond become carbon atoms constituting the main chain. Further, in the case of a fluorinated polymer obtained by cyclopolymerizing a monomer having two polymerizable double bonds, at least two among the four carbon atoms constituting the two polymerizable double bonds, become carbon atoms constituting the main chain.

The fluorinated polymer (a11) may, for example, be a polymer having a fluorinated alicyclic structure in its main chain. The "fluorinated alicyclic structure" is an alicyclic structure having fluorine atoms. Further, "having a fluorinated alicyclic structure in its main chain" means that at least one among the carbon atoms constituting the fluorinated alicyclic structure is a carbon atom constituting the main chain of the fluorinated polymer.

The fluorinated alicyclic structure may, for example, be a cyclic structure having some or all of the hydrogen atoms in the above hydrocarbon cyclic structure or heterocyclic structure substituted by fluorine atoms.

Among them, preferred is a fluorinated alicyclic structure having some or all of the hydrogen atoms in a heterocyclic structure having an etheric oxygen atom in its cyclic skeleton substituted by fluorine atoms, and particularly preferred is a fluorinated alicyclic structure having some or all of the hydrogen atoms in a heterocyclic structure having 1 or 2 etheric oxygen atoms in its cyclic skeleton substituted by fluorine atoms.

Further, the fluorinated alicyclic structure is preferably such that all of the hydrogen atoms in the cyclic structure are substituted by fluorine atoms.

Further, the fluorinated polymer (a11) may be a polymer wherein the alicyclic structures in its main chain are all alicyclic structures other than fluorinated alicyclic structures, and fluorine atoms are bonded to the main chain not forming the cyclic structures.

From the viewpoint of the reactivity with a reactive functional group of the silane coupling agent (a2), the fluorinated polymer (a11) preferably has a carboxy group or an alkoxycarbonyl group as a reactive functional group, and particularly preferably has a carboxy group or an alkoxycarbonyl group at a terminal of its main chain.

As the method for introducing a carboxy group or an alkoxycarbonyl group, the above-mentioned method (i) is preferred.

As the fluorinated polymer (a11), the following fluorinated polymer (a11-1) and fluorinated polymer (a11-2) are preferred.

Fluorinated polymer (a11-1): A polymer having units based on a cyclic fluorinated monomer.

Fluorinated polymer (a11-2): A polymer having units formed by cyclopolymerization of a diene-type fluorinated monomer (excluding a polymer having units based on a cyclic fluorinated monomer).

The fluorinated polymer (a11-1) has units based on a cyclic fluorinated monomer.

The cyclic fluorinated monomer is a monomer having a polymerizable double bond between carbon atoms constituting a fluorinated alicyclic structure, or a monomer having a polymerizable double bond between a carbon atom constituting a fluorinated alicyclic ring and a carbon atom of other than a fluorinated alicyclic ring.

The cyclic fluorinated monomer is preferably the following compound (1) or compound (2).

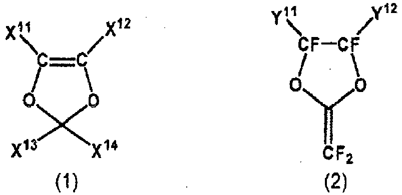

In the above formulae, each of X¹¹ to X¹⁴, Y¹¹ and Y¹² which are independent of one another, is a fluorine atom, a perfluoroalkyl group or a perfluoroalkoxy group.

The perfluoroalkyl group for X¹¹ to X¹⁴, Y¹¹ and Y¹² has preferably from 1 to 7, more preferably from 1 to 4, carbon atoms. Such a perfluoroalkyl group is preferably linear or branched, more preferably linear. Specifically, it may, for example, be a trifluoromethyl group, a pentafluoroethyl group or a heptafluoropropyl group, and particularly preferred is a trifluoromethyl group.

The perfluoroalkoxy group for X¹¹ to X¹⁴, Y¹¹ and Y¹² may, for example, be a group having an etheric oxygen atom bonded to the above perfluoroalkyl group. It may specifically be a trifluoromethoxy group.

X¹¹ is preferably a fluorine atom.

X¹² is preferably a fluorine atom, a trifluoromethyl group or a C₁₋₄ perfluoroalkoxy group, particularly preferably a fluorine atom or a trifluoromethoxy group.

Each of X¹³ and X¹⁴ which are independent of each other, is preferably a fluorine atom or a C₁₋₄ perfluoroalkyl group, particularly preferably a fluorine atom or a trifluoromethyl group.

Each of Y¹¹ and Y¹² which are independent of each other, is preferably a fluorine atom, a C₁₋₄ perfluoroalkyl group or a C₁₋₄ perfluoroalkoxy group, particularly preferably a fluorine atom or a trifluoromethyl group.

The compound (1) may be a compound wherein X¹³ and X¹⁴ may be bonded to each other to form a second fluorinated alicyclic ring.

Such a second fluorinated alicyclic ring is preferably a 4- to 6-membered ring.

Such a second fluorinated alicyclic ring is preferably a saturated alicyclic ring.

Such a second fluorinated alicyclic ring may have an etheric oxygen atom in the cyclic skeleton. In such a case, the number of etheric oxygen atoms in the fluorinated alicyclic ring is preferably 1 or 2.

In the compound (2), Y¹¹ and Y¹² may be bonded to each other to form a second fluorinated alicyclic ring.

Such a second fluorinated alicyclic ring is preferably a 4- to 6-membered ring.

Such a second fluorinated alicyclic ring is preferably a saturated alicyclic ring.

Such a second fluorinated alicyclic ring may have an etheric oxygen atom in the cyclic skeleton. In such a case, the number of etheric oxygen atoms in the fluorinated alicyclic ring is preferably 1 or 2.

Preferred specific examples of the compound (1) include the following compounds (1-1) to (1-5).

Preferred specific examples of the compound (2) include the following compounds (2-1) and (2-2).

Among the compounds (1) and (2), the cyclic fluorinated monomer is particularly preferably the compound (1-1), the compound (1-3) or the compound (2-2).

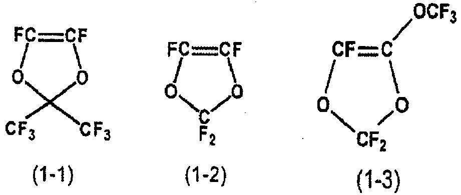

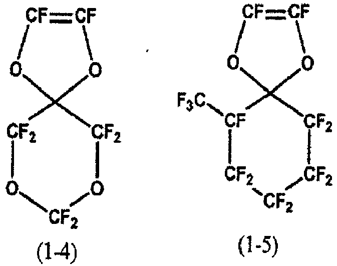

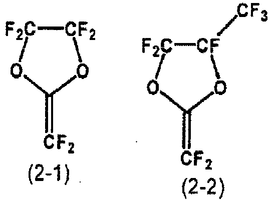

The fluorinated polymer (a11-1) may be constituted solely by units based on the cyclic fluorinated monomer, or may be a copolymer having such units and units based on another monomer other than the cyclic fluorinated monomer.

In such a fluorinated polymer (a11-1), the proportion of units based on the cyclic fluorinated monomer is preferably at least 20 mol%, more preferably at least 40 mol%, particularly preferably 100 mol%, based on the total of all units constituting the fluorinated polymer (a11-1), whereby it is soluble in a solvent, and a high charge density is obtainable.

Said another monomer other than the cyclic fluorinated monomer may be any monomer copolymerizable with the cyclic fluorinated monomer and is not particularly limited. Specifically, the after-mentioned diene-type fluorinated monomer, a monomer having a reactive functional group in a side chain, tetrafluoroethylene, chlorotrifluoroethylene or perfluoro(methyl vinyl ether) may, for example, be mentioned.

Further, a polymer obtainable by copolymerization of the cyclic fluorinated monomer with the diene-type fluorinated monomer is regarded as the fluorinated polymer (a11-1).

As the diene-type fluorinated monomer to be copolymerized with the cyclic fluorinated monomer, perfluorobutenyl vinyl ether (CF₂ =CFOCF₂ CF₂ CF=CF₂), or perfluoro(4-methylbutenyl) vinyl ether (CF₂ =CFOCF(CF₃)CF₂ CF=CF₂) is preferred, and perfluorobutenyl vinyl ether is particularly preferred.

The monomer having a reactive functional group in a side chain may be a fluorinated monomer such as methyl 2,2,3,3,4,4-hexafluoro-4-(1,2,2-trifluorovinyloxy)butanoate, methyl 2,2,3,3,-tetrafluoro-3-(1,1,2,2,3,3-hexafluoro-3-(1,2,2-trifluorovinyloxy)propoxy)propanoate, 1,1,2,2-tetrafluoro-2-(1,1,1,2,3,3-heaxfluoro-3-(1,2,2-trifluorovinyloxy)propane-2-yloxy)ethanesulfonyl fluoride or 1,1,2,2-tetrafluoro-2-(1,2,2-trifluorovinyloxy)ethanesulfonyl fluoride, or a hydrocarbon monomer such as hydroxyethyl vinyl ether, hydroxypropyl vinyl ether, hydroxybutyl vinyl ether, 2-(2-(vinyloxy)ethoxy)ethanol, methyl acrylate or hydroxyethyl acrylate.

As the monomer having a reactive functional group in a side chain to be copolymerized with the cyclic fluorinated monomer, a monomer having a vinyl group or an allyl group is preferred.

The fluorinated polymer (a11-1) is preferably the following fluorinated polymer (a11-1A) or fluorinated polymer (a11-1B), particularly preferably the fluorinated polymer (a11-1B) from such a viewpoint that the polymerizability is high, and a high charge density is obtainable.

Fluorinated polymer (a11-1A): A polymer having a carboxy group or an alkoxycarbonyl group introduced to a homopolymer obtainable from one cyclic fluorinated monomer selected from the group consisting of the compound (1-1), the compound (1-3) and the compound (2-2).

Fluorinated polymer (a11-1B): A polymer having a carboxy group or an alkoxycarbonyl group introduced to a copolymer obtainable from one cyclic fluorinated monomer selected from the group consisting of the compound (1-1), the compound (1-3) and the compound (2-2) and one member selected from the group consisting of tetrafluoroethylene, chlorotrifluoroethylene and a diene-type fluorinated monomer.

The fluorinated polymer (a11-2) is a polymer having units formed by cyclopolymerization of a diene type fluorinated monomer.

The diene-type fluorinated monomer is a monomer having two polymerizable double bonds and fluorine atoms. Such polymerizable double bonds are not particularly limited, but are preferably vinyl groups, allyl groups, acryloyl groups or methacryloyl groups.

The diene-type fluorinated monomer is preferably the following compound (3).

CF₂=CF-Q-CF=CF₂ (3)

In the formula (3), Q is a C₁₋₅ perfluoroalkylene group which may have an etheric oxygen atom and wherein some of fluorine atoms may be substituted by halogen atoms other than fluorine atoms. The perfluoroalkylene group may have a branch. Such halogen atoms other than fluorine atoms may, for example, be chlorine atoms or bromine atoms.

The number of carbon atoms in the perfluoroalkylene group of Q is preferably from 1 to 3.

Q is preferably a perfluoroalkylene group having an etheric oxygen atom. In such a case, the etheric oxygen atom in the perfluoroalkylene group may be present at one terminal of the group or may be present at both terminals of the group, or may be present between carbon atoms of the group. From the viewpoint of excellent cyclopolymerizability, it is preferably present at one terminal of the group.

The following compounds may be mentioned as specific examples of the compound (3).

CF₂=CFOCF₂CF=CF₂,

CF₂=CFOCF(CF₃)CF=CF₂,

CF₂=CFOCF₂CF₂CF=CF₂,

CF₂=CFOCF₂CF(CF₃)CF=CF2,

CF₂=CFOCF(CF₃)CF₂CF=CF₂,

CF₂=CFOCFClCF₂CF=CF₂,

CF₂=CFOCCl₂CF₂CF=CF₂,

CF₂=CFOCF₂OCF=CF₂,

CF₂=CFOC(CF₃)₂OCF=CF2,

CF₂=CFOCF₂CF(OCF₃)CF=CF₂,

CF₂=CFCF₂CF=CF₂,

CF₂=CFCF₂CF₂CF=CF₂,

CF₂=CFCF₂OCF₂CF=CF₂.

As the units to be formed by cyclopolymerization of the compound (3), the following units (3-1) to (3-4) may be mentioned.

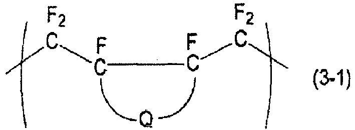

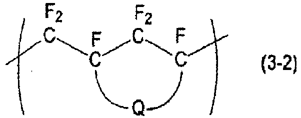

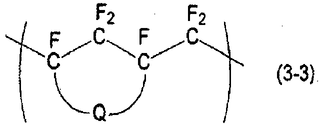

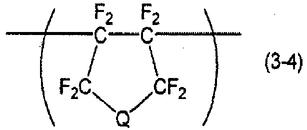

More specifically, the following units (3-a) to (3-k) may be mentioned, as the units to be formed by cyclopolymerization of the compound (3). In the units (3-a) to (3-k), one of x and y is 0, and the other is 1.

Here, the units (3-a) to (3-k) correspond to the above unit (3-1) when x=0 and y=1, and they correspond to the above unit (3-2) when x=1 and y=0.

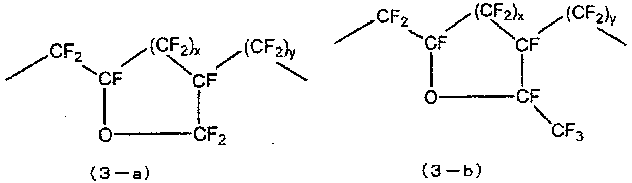

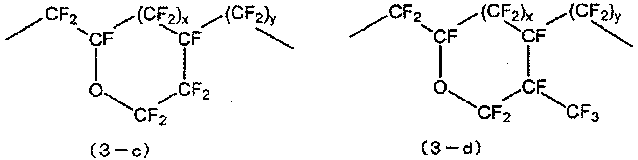

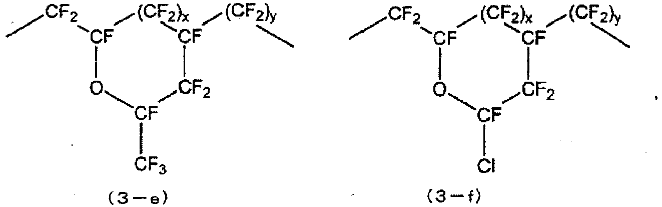

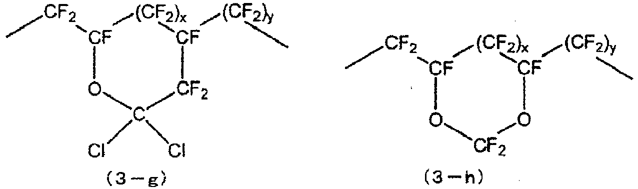

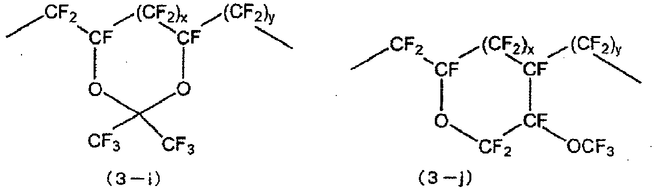

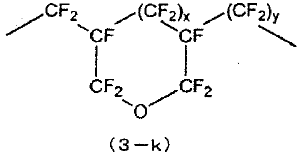

The fluorinated polymer (a11-2) may be constituted solely by units formed by cyclopolymerization of the diene-type fluorinated monomer, or may be a copolymer having such units and units based on another monomer (excluding a cyclic fluorinated monomer) other than the diene-type fluorinated monomer.

In such a fluorinated polymer (a11-2), the proportion of units formed by cyclopolymerization of the diene-type fluorinated monomer is preferably at least 50 mol%, more preferably at least 80 mol%, particularly preferably 100 mol%, based on the total of all units constituting the fluorinated polymer (a11-2), whereby it is soluble in a solvent and excellent in uniformity of the charge density.

Said another monomer other than the diene-type fluorinated monomer may be one copolymerizable with the diene-type fluorinated monomer and is not particularly limited. Specifically, a monomer having a reactive functional group in a side chain, tetrafluoroethylene, chlorotrifluoroethylene, or perfluoro(methyl vinyl ether) may, for example, be mentioned.

The monomer having a reactive functional group in a side chain may be the same one as mentioned above as another monomer for the fluorinated polymer (a11-2). By copolymerizing the monomer having a reactive functional group in a side chain, it is possible to introduce the reactive functional group to a terminal of a side chain of the fluorinated polymer (a11-2).

As the fluorinated polymer (a11-2), the following fluorinated polymers (a11-2A) to (a11-2C) are preferred.

Fluorinated polymer (a11-2A): A polymer having a carboxy group or an alkoxycarbonyl group introduced to a homopolymer obtainable from one diene-type fluorinated monomer selected from the group consisting of perfluorobutenyl vinyl ether (CF₂=CFOCF₂ CF₂ CF=CF₂), perfluoro(3-methylbutenyl) vinyl ether (CF₂ =CFOCF₂ CF(CF₃)CF=CF₂), perfluoro(4-methylbutenyl) vinyl ether (CF₂ =CFOCF(CF₃)CF₂ CF=CF₂), perfluoro(4-chlorobutenyl) vinyl ether (CF₂ =CFOCFClCF₂ CF=CF₂), perfluoro(4,4'-dichlorobutenyl) vinyl ether (CF₂ =CFOCCl₂ CF₂ CF=CF₂) and perfluoro(3-methoxybutenyl) vinyl ether (CF₂ =CFOCF₂ CF(OCF₃)CF=CF₂) (hereinafter, these six monomers will be generally referred to as "monomers (c)").

Fluorinated polymer (a11-2B): A polymer having a carboxy group or an alkoxycarbonyl group introduced to a copolymer obtainable from two or three members selected from the group consisting of the monomers (c).

Fluorinated polymer (a11-2C): A polymer having a carboxy group or an alkoxycarbonyl group introduced to a copolymer of one diene-type fluorinated monomer selected from the group consisting of the monomers (c) and tetrafluoroethylene or chlorotrifluoroethylene.

As the fluorinated polymer (a11-2), among the fluorinated polymers (a11-2A) to (a11-2C), the fluorinated polymer (a11-2A) is more preferred, and a polymer having a carboxy group or an alkoxycarbonyl group introduced to a homopolymer of perfluorobutenyl vinyl ether or perfluoro(3-methylbutenyl) vinyl ether is particularly preferred.

In the production of the fluorinated polymer (a11), polymerization is carried out by means of a polymerization initiator.

As the polymerization initiator, a commonly-employed polymerization initiator may be used, and a polymerization initiator having a peroxide group is preferred. As the polymerization initiator having a peroxide group, either a hydrocarbon-type polymerization initiator or a fluorinated polymerization initiator may be used.

As the hydrocarbon type polymerization initiator, diisopropyl peroxydicarbonate, diisobutyl peroxydicarbonate, dipropanoic acid peroxide, dibutanoic acid peroxide, benzoic peroxide or di-tert-butyl peroxide may, for example, be mentioned.

As the fluorinated polymerization initiator, di-perfluoropropanoic acid peroxide, diperfluorobutanoic acid peroxide, perfluorobenzoic peroxide or di-perfluoro tert-butyl peroxide may, for example, be mentioned.

The fluorinated polymer (a11) is preferably amorphous, since it is thereby soluble in a solvent and has good compatibility with the silane coupling agent (a2).

The mass average molecular weight (Mw) of the fluorinated polymer (a11) is preferably at least 50,000, more preferably at least 150,000, further preferably at least 200,000, particularly preferably at least 250,000. When the mass average molecular weight (Mw) is at least 50,000, the film formation becomes easy. Further, when the mass average molecular weight (Mw) is at least 200,000, the heat resistance of the resin layer (A) will be improved, and the thermal stability of the electret will be improved.

On the other hand, the mass average molecular weight (Mw) of the fluorinated polymer (a11) is preferably at most 1,000,000, more preferably at most 850,000, further preferably at most 650,000, particularly preferably at most 550,000. When the mass average molecular weight (Mw) is at most the above upper limit, the solubility in a solvent will be improved, and a resin layer having a uniform thickness can be obtained.

Further, the mass average molecular weight (Mw) of the fluorinated polymer (a11) correlates with the intrinsic viscosity of the fluorinated polymer (a11). Accordingly, it preferably has an intrinsic viscosity corresponding to the above preferred mass average molecular weight (Mw).

A specific preferred intrinsic viscosity value varies depending upon the units constituting the fluorinated polymer (a11). For example, in a case where the fluorinated polymer (a11) is a cyclic polymer of CF₂ =CFOCF₂ CF₂ CF=CF₂, the intrinsic viscosity (30°C) is preferably from 0.25 to 0.90 dl/g, more preferably from 0.30 to 0.80 dl/g, particularly preferably from 0.30 to 0.60 dl/g.

Here, such an intrinsic viscosity is a value measured by using perfluoro(2-butyltetrahydrofuran) as a solvent.

The relative dielectric constant of the fluorinated polymer (a11) is preferably from 1.8 to 8, more preferably from 1.8 to 5, particularly preferably from 1.8 to 3, since the charge retention performance of the electret is thereby improved. Such a relative dielectric constant is a value measured at a frequency of 1 MHz in accordance with ASTM D150.

Further, as the fluorinated polymer (a11), one having a high volume resistivity and a high dielectric breakdown voltage is preferred.

The volume resistivity of the fluorinated polymer (a11) is preferably from 10¹⁰ to 10²⁰ Ω·cm, particularly preferably from 10¹⁶ to 10¹⁹ Ω·cm. Such a volume resistivity is a value measured in accordance with ASTM D257.

The dielectric breakdown voltage of the fluorinated polymer (a11) is preferably from 10 to 25 kV/mm, particularly preferably from 15 to 22 kV/mm. Such a dielectric breakdown voltage is a value measured in accordance with ASTM D149.

As the fluorinated polymer (a11), one having high hydrophobicity is preferred in order to exclude water which may be adversely influential over the insulating property and to maintain a high insulating property.

As the fluorinated polymer (a11), a commercial product may be used. For example, CYTOP (registered trademark, manufactured by Asahi Glass Company, Limited) may be mentioned.

As the fluorinated polymer (a11), one type may be used alone, or two or more types may be used in combination.

### <ETFE>

ETFE is a copolymer having units based on tetrafluoroethylene (hereinafter referred to as "TFE") and units based on ethylene (hereinafter referred to as "E"). ETFE is advantageous from the following viewpoints (1) to (3).
(1) It is less expensive than the fluorinated polymer (a11), and an electret can thereby be produced at a lower cost.
(2) It has crystallinity, whereby it can be dispersed in a nano-order by letting it be taken into amorphous sites between crystals by introducing an additive into an electret.
(3) It has crystallinity, whereby it tends to be hardly softened even at a glass transition temperature or higher.

The molar ratio of units based on TFE to units based on E (i.e. TFE/E) is preferably from 70/30 to 30/70, more preferably from 65/35 to 40/60, particularly preferably from 60/40 to 40/60. When the molar ratio is within such a range, a balance between the characteristics attributable to units based on TFE such as the thermal resistance, weather resistance, chemical resistance, etc. and the characteristics attributable to units based on E such as the mechanical strength, melt-forming properties, etc., will be good.

ETFE preferably has units based on monomers other than TFE and E, since various functions may thereby be imparted. Such monomers other than TFE and E may, for example, be other monomers disclosed in paragraphs [0025] to [0026] of WO2010/044421 and [0026] to [0027] of WO2010/044425. For example, vinylidene fluoride (CF₂=CH₂), hexafluoropropylene (CF₂=CFCF₃), 3,3,4,4,4-pentafluro-1-butene (CF₃CF₂CH=CH₂), 3,3,4,4,5,5,6,6,6-nonafluoro-1-hexene (CF₃CF₂CF₂CF₂CH=CH₂), 2,3,3,4,4,5,5-heptafluoro-1-pentene (CF₂HCF₂CF₂CF=CH₂), propylene, isobutylene, 4-methyl-1-pentene, vinyl chloride, vinylidene chloride, etc. may be mentioned.

ETFE preferably has a reactive functional group. The reactive functional group of ETFE is preferably a carboxy group and its salt (-COOM¹, wherein M¹ is a metal atom or atomic group capable of forming a salt with a carboxy group), an acid anhydride group formed by dehydration condensation of two carboxy groups in one molecule, and an acyl group. As the method for introducing a reactive functional group to ETFE, among the above mentioned methods (i) to (iv), the method (ii), the method (iv) or a combination of the methods (ii) and (iv) is preferred.

In a case where a reactive functional group is to be introduced to ETFE by the method (ii), the proportion of units based on a monomer having the reactive functional group in ETFE is preferably from 0.01 to 5 mol% based on all units constituting ETFE. When the proportion is within such a range, it is possible to impart a sufficient reactivity with the silane coupling agent (a2) without impairing the characteristics of ETFE composed substantially solely of units based on TFE and units based on E.

The melting point of ETFE is preferably from 130 to 275°C, more preferably from 140 to 265°C, particularly preferably from 150 to 260°C, from the viewpoint of the solubility, mechanical strength, etc.

The melting point of ETFE is a value measured by a differential scanning calorimetry (DSC) device.

The volume flow rate (hereinafter referred to as "the value Q") of ETFE is preferably from 0.1 to 2,000 mm³/sec. The value Q is an index representing the melt flowability of ETFE and will be an index for the molecular weight. The larger the value Q, the lower the molecular weight, and the smaller the value Q, the higher the molecular weight. The value Q is an extrusion rate when ETFE is extruded into an orifice having a diameter of 2.1 mm and a length of 8 mm under a load of 7 kgf at a temperature higher by 50°C than the melting point of ETFE, by means of a flow tester (manufactured by Shimadzu Corporation). If the value Q is too small, the melting property tends to deteriorate, and if it is too large, the mechanical strength of the fluorinated copolymer tends to be low, and at the same time, cracking, etc. are likely to occur in the resin layer (A). The value Q of ETFE is more preferably from 5 to 500 mm³/sec, particularly preferably from 10 to 200 mm³/sec. When the value Q is within such a range, the mechanical strength of ETFE will be improved, and cracking, etc. will be less likely to occur in the resin layer (A).

As ETFE, commercial products may be used. For example, those disclosed in paragraph [0028] of WO2010/044421 and in paragraph [0031] of WO 2010/044425, and Fluon (registered trade mark) ETFE Series and Fluon LM-ETFE AH Series, manufactured by Asahi Glass Company Limited, etc. may be mentioned.

As ETFE, one type may be used alone, or two or more types may be used in combination.

### <Silane coupling agent (a2)>

The silane coupling agent (a2) preferably has a reactive functional group. The reactive functional group is preferably a group reactive with the reactive functional group of the fluorinated polymer (a1). The reactive functional group may, for example, be an amino group, a hydroxy group, an alkoxy group, a vinyl group, an epoxy group, a (meth)acrylic group or a mercapto group. An amino group is preferred from such a viewpoint that a site derived from the silane coupling agent polarizes to form a nanocluster structure, whereby a high charge density is obtainable. That is, as the silane coupling agent (a2), a silane coupling agent having an amino group (hereinafter referred to as a "silane coupling agent (a21)") is preferred. The number of amino groups may be one, or two or more.

As the silane coupling agent (a21), the following compounds may, for example, be mentioned.

A dialkoxysilane such as γ-aminopropylmethyldiethoxysilane, γ-aminopropylmethyldimethoxysilane, N-(β-aminoethyl)-γ-aminopropylmethyldimethoxysilane or N-(β-aminoethyl)-γ-aminopropylmethyldiethoxysilane.

A trialkoxysilane such as γ-aminopropyltrimethoxysilane, γ-aminopropyltriethoxysilane, N-(β-aminoethyl)-γ-aminopropyltrimethoxysilane or N-(β-aminoethyl)-γ-aminopropyltriethoxysilane.

Further, as the silane coupling agent (a21), a silane coupling agent having an aromatic amine structure, such as the following compound (s1) or (s2) may be mentioned.

ArSi(OR¹)(OR²)(OR³) (s1)

ArSiR⁴ (OR¹)(OR²) (s2)

wherein each of R¹ to R⁴ which are independent of one another is a hydrogen atom, a C₁₋₂₀ alkyl group or an aryl group, and Ar is a p-, m- or o-aminophenyl group.

The following ones may be mentioned as specific examples of the compound (s1) or (s2):
aminophenyltrimethoxysilane, aminophenyltriethoxysilane, aminophenyltripropoxysilane, aminophenyltriisopropoxysilane, aminophenylmethyldimethoxysilane, aminophenylmethyldiethoxysilane, aminophenylmethyldipropoxysilane, aminophenylmethyldiisopropoxysilane, aminophenylphenyldimethoxysilane, aminophenylphenyldiethoxysilane, aminophenylphenyldipropoxysilane, aminophenylphenyldiisopropoxysilane, etc.

Further, it is also preferred to use a partially hydrolyzed condensate of the silane coupling agent (a21). It is also preferred to use a co-partially hydrolyzed condensate of the silane coupling agent (a21) with a tetraalkoxysilane such as tetramethoxysilane, tetraethoxysilane or tetrapropoxysilane.

In consideration of efficient availability, etc., a particularly preferred silane coupling agent (a21) is at least one member selected from γ-aminopropylmethyldiethoxysilane, γ-aminopropylmethyldimethoxysilane, N-(β-aminoethyl)-γ-aminopropylmethyldimethoxysilane, N-(β-aminoethyl)-γ-aminopropylmethyldiethoxysilane, γ-aminopropyltrimethoxysilane, γ-aminopropyltriethoxysilane, N-(β-aminoethyl)-γ-aminopropyltrimethoxysilane, N-(β-aminoethyl)-γ-aminopropyltriethoxysilane and aminophenyltrimethoxysilane.

As the silane coupling agent (a21), one type may be used alone, or two or more types may be used in combination.

### (Combination of fluorinated polymer (a11) and silane coupling agent (a2))

As a combination of a fluorinated polymer (a11) and a silane coupling agent (a2), preferred is a combination of a fluorinated polymer (a11) having a carboxy group or an alkoxycarbonyl group and a silane coupling agent (a21). Among them, the following combinations 1 and 2 are more preferred, and the combination 2 is particularly preferred.

Here, a reaction product of a fluorinated polymer (a11) having a carboxy group or an alkoxycarbonyl group and a silane coupling agent (a21) is a compound wherein the carboxy group or the alkoxycarbonyl group of the fluorinated polymer (a11) and the amino group of the silane coupling agent are reacted to form an amido bond.

### <Combination 1>

Fluorinated polymer (a11): one member selected from the group consisting of a polymer having a carboxy group or an alkoxycarbonyl group introduced to a copolymer of the compound (1-1) with TFE or a diene-type fluorinated monomer, and a polymer having a carboxy group or an alkoxycarbonyl group introduced to a homopolymer of the diene-type fluorinated monomer.

Silane coupling agent (a21): one member selected from γ-aminopropylmethyldiethoxysilane, γ-aminopropylmethyldimethoxysilane, N-(β-aminoethyl)-y-aminopropylmethyldimethoxysilane, N-(β-aminoethyl)-γ-aminopropylmethyldiethoxysilane, γ-aminopropyltrimethoxysilane, γ-aminopropyltriethoxysilane, N-(β-aminoethyl)-γ-aminopropyltrimethoxysilane, N-(β-aminoethyl)-γ-aminopropyltriethoxysilane and aminophenyltrimethoxysilane.

### <Combination 2>

Fluorinated polymer (a11): a polymer having a carboxy group or an alkoxycarbonyl group introduced to a homopolymer of the diene-type fluorinated monomer.

Silane coupling agent (a21): one member selected from γ-aminopropylmethyldiethoxysilane, N-(β-aminoethyl)-γ-aminopropylmethyldimethoxysilane, γ-aminopropyltriethoxysilane, aminophenyltrimethoxysilane, N-(β-aminoethyl)-γ-aminopropyltrimethoxysilane and N-(β-aminoethyl)-γ-aminopropyltriethoxysilane.

As the diene-type fluorinated monomer in the combinations 1 and 2, perfluorobutenyl vinyl ether (CF₂ =CFOCF₂ CF₂ CF=CF₂) or perfluoro(4-methylbutenyl) vinyl ether (CF₂ =CFOCF(CF₃)CF₂ CF=CF₂) is preferred, and perfluorobutenyl vinyl ether is particularly preferred.

### (Combination of ETFE and silane coupling agent (a2))

As a combination of ETFE and a silane coupling agent (a2), the following combination is preferred.

ETFE: ETFE wherein the ratio of TFE/ethylene/monomer having a reactive functional group (at least one member selected from the group consisting of a carboxy group and its salt (-COOM¹, where M¹ is a metal atom or atomic group capable of forming a salt with a carboxy group), an acid anhydride group obtained by dehydration condensation of two carboxy groups in one molecule, and an acyl group) is from 65 to 40/from 35 to 60/from 0.01 to 5 (molar ratio).

Silane coupling agent (a2): silane coupling agent (a21).

Among them, the following combinations 3 to 7 are particularly preferred.

### <Combination 3>

ETFE: a copolymer of TFE/E/hexafluoropropylene/3,3,4,4,5,5,6,6,6-nonafluoro-1-hexene/itaconic anhydride.

Silane coupling agent (a21): γ-aminopropylmethyldiethoxysilane.

### <Combination 4>

ETFE: a copolymer of TFE/E/hexafluoropropylene/3,3,4,4,5,5,6,6,6-nonafluoro-1-hexene/itaconic anhydride.

Silane coupling agent (a21): N-(β-aminoethyl)-γ-aminopropylmethyldimethoxy-silane.

### <Combination 5>

ETFE: a copolymer of TFE/E/hexafluoropropylene/3,3,4,4,5,5,6,6,6-nonafluoro-1-hexene/itaconic anhydride.

Silane coupling agent (a21): N-(β-aminoethyl)-γ-aminopropyltriethoxysilane.

### <Combination 6>

ETFE: a copolymer of TFE/E/ 3,3,4,4,4-pentafluoro-1-butene/itaconic anhydride.

Silane coupling agent (a21): N-(β-aminoethyl)-γ-aminopropylmethyldimethoxysilane.

### <Combination 7>

ETFE: Dyneon (registered trade mark) HTE 1705, manufactured by Dyneon (a copolymer of TFE, ethylene and hexafluoropropylene).

Silane coupling agent (a21): N-(β-aminoethyl)-γ-aminopropylmethyldimethoxy-silane.

### [Resin layer (B)]

The resin layer (B) in the present invention does not contain a reaction product of a fluorinated polymer (b1) with a silane coupling agent (b2) and contains a fluorinated polymer (b1), and it is laminated directly on the air side of the resin layer (A) to constitute the outermost layer so as to be in contact with air. Preferred embodiments of the fluorinated polymer (b1) may be the same ones as the preferred embodiments of the fluorinated polymer (a1) mentioned for the resin layer (A). The fluorinated polymer (b1) is preferably a fluorinated polymer of the same type as the fluorinated polymer (a1) for the resin layer (A), whereby the adhesion between the resin layer (A) and the resin layer (B) will be improved, and the effect to suppress penetration of moisture between layers of the resin layer (A) and the resin layer (B) will be more increased. Further, when a fluorinated polymer (b11) is taken up as one embodiment of the fluorinated polymer (b1), the fluorinated polymer (b11) is preferably a fluorinated polymer of the same type as the fluorinated polymer (a11) for the resin layer (A). Further, the silane coupling agent (b2) includes all silane coupling agents and may be the same ones as the silane coupling agent (a2) for the resin layer (A).

The resin layer (B) is less likely to absorb water as compared with the resin layer (A), since it does not contain a reaction product of the fluorinated polymer (b1) and the silane coupling agent (b2), and therefore, an excellent moisture-proof property is thereby obtainable.

### [Process for producing electret]

The process for producing an electret of the present invention is preferably a process comprising the following steps (X1) to (X5):
(X1) a step of applying a coating fluid (hereinafter referred to also as a "coating fluid (α)") containing a fluorinated polymer (a1), a silane coupling agent (a2) and a solvent (hereinafter referred to also as a "solvent (a3)") onto a substrate to form a coating film (A1), followed by predrying,
(X2) a step of baking the predried coating film (A1) to form a resin layer (A),
(X3) a step of applying a coating fluid (hereinafter referred to also as a "coating fluid (β)") not containing a silane coupling agent (b2) and containing a fluorinated polymer (b1) and a solvent (hereinafter referred to also as a "solvent (b3)") onto the resin layer (A) to form a coating film (B1), followed by predrying,
(X4) a step of baking the predried coating film (B1) to form a resin layer (B) thereby to form a laminate having the resin layer (A) and the resin layer (B) directly laminated on the substrate, and
(X5) a step of injecting an electric charge to the laminate.

In the following, when the description refers to a fluorinated polymer (a1), the fluorinated polymer (a1) is in a mode containing a fluorinated polymer (a11), ETFE, PTFE and FEP, and when the description refers to a fluorinated polymer (b1), the fluorinated polymer (b1) is in a mode containing a fluorinated polymer (b11), ETFE, PTFE and FEP.

### (Step (X1))

Step (X1) is a step of preparing a coating fluid (α) containing a fluorinated polymer (a1), a silane coupling agent (a2) and a solvent (a3), and then, applying the coating fluid (α) onto a substrate to form a coating film (A1), followed by predrying.

### <Solvent (a3)>

The solvent (a3) is preferably a solvent which dissolves at least the fluorinated polymer (a1). In a case where the fluorinated polymer (a1) is a fluorinated polymer (a11), a fluorinated organic solvent is, for example, preferred.

As the solvent (a3), single use of a solvent excellent in dissolving the fluorinated polymer (a1), single use of a solvent to dissolve both the fluorinated polymer (a1) and the silane coupling agent (a2), or combined use of a solvent excellent in dissolving the fluorinated polymer (a1) and a solvent to dissolve both the fluorinated polymer (a1) and the coupling agent (a2), may be mentioned, from such a viewpoint that a uniform coating fluid is thereby obtainable.

As the solvent excellent in dissolving the fluorinated polymer (a1), an aprotic fluorinated solvent is preferred. The aprotic fluorinated solvent is a fluorinated solvent having no proton-donating property. As such aprotic fluorinated solvents, the following fluorinated compounds may be exemplified.

A polyfluoro aromatic compound such as perfluorobenzene, pentafluorobenzene, 1,3-bis(trifluoromethyl)benzene or 1,4-bis(trifluoromethyl)benzene; a polyfluorotrialkylamine compound such as perfluorotributylamine or perfluorotripropylamine; a polyfluorocycloalkane compound such as perfluorodecalin, perfluorocyclohexane or perfluoro(1,3,5-trimethylcyclohexane); a polyfluoro cyclic ether compound such as perfluoro(2-butyltetrahydrofuran); a perfluoropolyether; and a polyfluoroalkane compound such as perfluorohexane, perfluorooctane, perfluorodecane, perfluorododecane, perfluoro(2,7-dimethyloctane), 1,1,2-trichloro-1,2,2-trifluoroethane, 1,1,1-trichloro-2,2,2-trifluoroethane, 1,3-dichloro-1,1,2,2,3-pentafluoropropane, 1,1,1,3-tetrachloro-2,2,3,3-tetrafluoropropane, 1,1,3,4-tetrachloro-1,2,2,3,4,4-hexafluorobutane, perfluoro(1,2-dimethylhexane), perfluoro(1,3-dimethylhexane), 1,1,2,2,3,3,5,5,5-decafluoropentane, 1,1,1,2,2,3,3,4,4,5,5,6,6-tridecafluorohexane, 1,1,1,2,2,3,3,4,4,5,5,6,6,7,7,8,8-heptadecafluorooctane, 1,1,1,2,2,3,3,4,4,5,5,6,6,7,7,8,8,9,9,10,10-henicosafluorodecane, 1,1,1,2,2,3,3,4,4-nonafluorohexane, 1,1,1,2,2,3,3,4,4,5,5,6,6-tridecafluorooctane, 1,1,1,2,2,3,3,4,4,5,5,6,6,7,7,8,8-heptadecafluorodecane, 1,1,1,2,3,4,5,5,5-nonafluoro-4-(trifluoromethyl)pentane,1,1,1,2,2,3,5,5,5-nonafluoro-4-(trifluoromethyl)pentane, 3,3-dichloro-1,1,1,2,2-pentafluoropropane or 1,3-dichloro-1,1,2,2,3-pentafluoropropane.

One of these aprotic fluorinated solvents may be used alone or two or more of them may be used in combination.

As an aprotic fluorinated solvent, a hydrofluoroether (HFE) or a hydrofluorocarbon (HFC) may also be mentioned in addition to the above solvents.

As HFE, HFE represented by the formula R^{a}-O-R^{b} (wherein R^{a} is a C₅₋₁₂ linear or branched polyfluoroalkyl group which may have an etheric oxygen bond, and R^{b} is a C₁₅ linear or branched alkyl group or polyfluoroalkyl group) is preferred.

The polyfluoroalkyl group is a group having at least two hydrogen atoms in an alkyl group substituted by fluorine atoms and includes a perfluoroalkyl group having all hydrogen atoms in an alkyl group substituted by fluorine atoms, and a group having at least two hydrogen atoms in an alkyl group substituted by fluorine atoms and having at least one hydrogen atom in the alkyl group substituted by a halogen atom other than a fluorine atom. As the halogen atom other than a fluorine atom, a chlorine atom is preferred.

When the number of carbon atoms in R^{a} is at least 5, it is easy to dissolve the fluorinated polymer (a1), and when the number of carbon atoms in R^{a} at most 12, it is easy to obtain such a solvent industrially. The number of carbon atoms in R^{a} is preferably from 6 to 10, particularly preferably from 6 to 7, or from 9 to 10.

R^{a} is preferably a group wherein the proportion of the number of hydrogen atoms substituted by fluorine atoms is at least 60%, more preferably at least 80%, in the total number of hydrogen atoms in the alkyl group corresponding to the polyfluoroalkyl group. Particularly preferably, it is a perfluoroalkyl group.

In a case where R^{a} has an etheric oxygen atom, the number of etheric oxygen atoms in R^{a} is preferably from 1 to 3, more preferably from 1 to 2, since the solubility of the fluorinated polymer (a1) will thereby be improved.

When the number of carbon atoms in R^{b} is at most 5, the solubility of the fluorinated polymer (a1) will be improved.

R^{b} is preferably a methyl group, an ethyl group, a trifluoroethyl group, a tetrafluoroethyl group or a tetrafluoropropyl group.

The molecular weight of HFE is preferably at most 1,000, since it is thereby easy to prevent the viscosity of the coating fluid from becoming too high, and the solubility of the fluorinated polymer (a1) will be improved.

Further, in order to improve the solubility of the fluorinated polymer (a1), the fluorine content in HFE is preferably from 60 to 80 mass%.

As HFE, F(CF₂)₄OCH₃, HCF₂CF₂OCH₂CF₃, HCF₂CF₂CH₂OCH₂CF₃, F(CF₂)₅OCH₃, F(CF₂)₆OCH₃, F(CF₂)₇ OCH₃, F(CF₂)₈ OCH₃, F(CF₂)₉OCH₃, F(CF₂)₁₀OCH₃, H(CF₂)₆OCH₃, (CF₃)₂CFCF(OCH₃ )CF₂CF₃, F(CF₂)₃ OCF(CF₃)CF₂ OCH₃, F(CF₂)₃ OCF(CF₃)CF₂ OCF(CF₃)CF₂ OCH₃, F(CF₂)₈OCH₂CH₂CH₃, (CF₃)₂CFCF₂CF₂OCH₃ and F(CF₂)₂O(CF₂)₄OCH₂CH₃ a r e preferred. (CF₃)₂CFCF(OCH₃)CF₂CF₃ is particularly preferred.

One of these HFE may be used alone, or two or more of them may be used in combination.

HFC may, for example, be C₆F₁₃CH₂CH₃, C₆F₁₃H, C₈F₁₇CH₂CH₃ or C₈F₁₇H. Among them, C₆F₁₃CH₂CH₃ or C₆F₁₃H is preferred from such a viewpoint that its bioaccumulation potential is low.

As a solvent to dissolve both the fluorinated polymer (a1) and the silane coupling agent (a2), a protic fluorinated solvent is preferred. The protic fluorinated solvent is a fluorinated solvent having a proton-donating property. As such protic fluorinated solvents, the following compounds may, for example, be mentioned.

A fluorinated alcohol such as trifluoroethanol, 2,2,3,3,3-pentafluoro-1-propanol, 2-(perfluorobutyl)ethanol, 2-(perfluorohexyl)ethanol, 2-(perfluorooctyl)ethanol, 2-(perfluorodecyl)ethanol, 2-(perfluoro-3-methylbutyl)ethanol, 2,2,3,3-tetrafluoro-1-propanol, 2,2,3,3,4,4,5,5-octafluoro-1-pentanol, 2,2,3,3,4,4,5,5,6,6,7,7-dodecafluoro-1-heptanol, 2,2,3,3,4,4,5,5,6,6,7,7,8,8-hexadecafluoro-1-nonanol, 1,1,1,3,3,3-hexafluoro-2-propanol or 1,3,3,4,4,4-hexafluoro-2-butanol;
a fluorinated carboxylic acid such as trifluoroacetic acid, perfluoropropanoic acid, perfluorobutanoic acid, perfluoropentanoic acid, perfluorohexanoic acid, perfluoroheptanoic acid, perfluorooctanoic acid, perfluorononanoic acid, perfluorodecanoic acid, 1,1,2,2-tetrafluoropropanoic acid, 1,1,2,2,3,3,4,4-octafluoropentanoic acid, 1,1,2,2,3,3,4,4,5,5-dodecafluoroheptanoic acid or 1,1,2,2,3,3,4,4,5,5,6,6-hexadecafluorononanoic acid;
an amide of such a fluorinated carboxylic acid;
a fluorinated sulfonic acid such as trifluoromethanesulfonic acid or heptadecafluorooctanesulfonic acid; etc.

One of these protic fluorinated solvents may be used alone, or two or more of them may be used in combination.

The boiling point of the solvent (a3) is preferably from 65 to 220°C. When the boiling point is at least 65°C, a uniform coating film (A1) can easily be formed.

Further, the water content of the solvent (a3) should better be small. Specifically, the water content of the solvent (a3) is preferably at most 100 mass ppm, particularly preferably at most 20 mass ppm.

The coating fluid (α) may be prepared by mixing the fluorinated polymer (a1), the silane coupling agent (a2) and the solvent (a3), or it may be prepared by preparing a fluid having the fluorinated polymer (a1) and the solvent (a3) mixed, and a fluid having the silane coupling agent (a2) and the solvent (a3) mixed, respectively, followed by mixing them. Otherwise, it may be prepared by preparing a fluid having the fluorinated polymer (a1) and the solvent (a3) mixed, followed by mixing the silane coupling agent (a2) thereto. Here, in each fluid, it is preferred that the fluorinated polymer (a1) and the silane coupling agent (a2) are dissolved in the solvent (a3).

As a means to be used for mixing the fluorinated polymer (a1), the silane coupling agent (a2) and the solvent (a3), a stirring operation may, for example, be mentioned.

In a case where the fluorinated polymer (a11) is used, the temperature of the coating fluid (α) is preferably at most 30°C, at the time of preparing the coating fluid (α), since it is thereby easy to suppress deterioration of the fluorinated polymer (a11) and the silane coupling agent (a2). The lower limit is preferably at least 20°C, particularly preferably at least 25°C, since the fluorinated polymer (a11) and the silane coupling agent (a2) are thereby readily soluble.

The time for preparing the coating fluid (α) is preferably from 0.5 to 10 hours, particularly preferably from 1 to 3 hours, although it depends on e.g. the contents, shapes, etc. of the fluorinated polymer (a11) and the silane coupling agent (a2). When the time is at least the lower limit value within the above range, a sufficient dissolved state will be readily obtainable, and when it is at most the upper limit value within the above range, the production efficiency will be improved.

The content of the fluorinated polymer (a1) in the coating fluid (α) is preferably from 0.1 to 30 mass%, particularly preferably from 0.5 to 20 mass%.

The content of the silane coupling agent (a2) in the coating fluid (α) is preferably from 0.1 to 20 mass%, more preferably from 0.3 to 10 mass%, particularly preferably from 0.5 to 5 mass%, based on the total amount of the fluorinated polymer (a1) and the silane coupling agent (a2). When the content of the silane coupling agent (a2) is within the above range, it is possible to uniformly mix the fluorinated polymer (a1) and the silane coupling agent (a2), and it is easy to suppress phase separation in the coating fluid (α).

Further, a part of the silane coupling agent (a2) may be reacted with and bonded to the fluorinated polymer (a1) in the coating fluid (α).

The solid content concentration of the coating fluid (α) may be suitably set depending upon the thickness of the coating film (A1) to be formed, and it is preferably from 0.1 to 30 mass%, particularly preferably from 0.5 to 20 mass%.

Here, the solid content of the coating fluid in the present invention can be calculated by distilling off the solvent by heating the coating fluid, of which the mass has been measured, under ordinary pressure at 200°C for 1 hour, and measuring the mass of the remaining solid content.

The coating method to apply the coating fluid (α) on a substrate, may, for example, be a roll coater method, a casting method, a dipping method, a spin coating method, a casting-on-water method, a Langmuir·Blodgett method, a die coating method, an ink jet method or a spray coating method. Otherwise, a printing technique such as a relief printing method, a gravure printing method, a planographic printing method, a screen printing method or a flexo printing method, may also be used.

The temperature of the coating fluid (α) at the time of coating is preferably from 10 to 30°C, particularly preferably from 20 to 25°C, although it may vary depending upon the composition of the coating fluid (α). When the temperature is at least the lower limit value within the above range, a uniform coating film (A1) can be formed without dew condensation or precipitation. When the temperature is at most the upper limit value within the above range, vaporization of the solvent (a3) tends to be less likely, and the possibility of formation of air bubbles or the like tends to be small.

The shape and size of the coating film (A1) may suitably be set depending upon the shape and size of the desired electret.

In the predrying, the solvent (a3) in the coating film (A1) should be dissipated as far as possible for predrying. By such predrying, it is possible to prevent deficiencies such as bubbling, surface roughening, non-uniformity, etc. in the resin layer (A) after baking.

The predrying temperature is preferably from 50 to 130°C, particularly preferably from 70 to 120°C. When the temperature is at least the lower limit value within the above range, the solvent (a3) tends to be readily dissipated. When the temperature is at most the upper limit value within the above range, the solvent can be evenly dried.

The predrying time is preferably from 5 minutes to 1 hour, particularly preferably from 5 to 30 minutes.

### (Step (X2))

Step (X2) is a step of baking the predried coating film (A1) to form a resin layer (A) on the substrate. After the baking, the resin layer (A) is cooled to ordinary temperature.

The baking temperature is preferably from 100 to 300°C, more preferably from 120 to 300°C, particularly preferably from 150 to 300°C. When the baking temperature is at least the lower limit value within the above range, the reaction of the fluorinated polymer (a1) and the silane coupling agent (a2) is accelerated, and a resin layer (A) excellent in the thermal stability tends to be readily formed. When it is at most the upper limit value within the above range, decomposition of the silane coupling agent (a2) can easily be prevented.

The baking time is preferably from 0.5 to 5 hours. When the baking time is at least the lower value within the above range, the amount of the remaining solvent can be made smaller. When it is at most the upper limit value within the above range, the production efficiency will be improved.

The atmosphere during the baking may be in an inert gas or in air.

In a case where the silane coupling agent (a2) has a hydrolysable silyl group or silanol group, in air is preferred, since the hydrolytic condensation is thereby accelerated. Here, in an inert gas means in a gas which contains at least 99 vol% of at least one inert gas selected from the group consisting of nitrogen gas, helium gas and a rare gas such as argon gas.

The pressure during the baking is preferably ordinary pressure.

The cooling may be annealing or quenching, but annealing is preferred. The cooling rate is preferably from 5 to 10°C /min. The cooling may be carried out by means of a cooling device or by leaving the resin layer to stand still for natural cooling. From the viewpoint of stabilizing the state (such as the surface smoothness, the uniformity of the film thickness, etc.) of the resin layer (A), it is preferred to carry out the cooling by means of a cooling device.

Further, the steps (X1) and (X2) may be repeated plural times to form the resin layer (A).

### (Step (X3))

Step (X3) is a step of preparing a coating fluid (β) which does not contain a silane coupling agent (b2) and which contains a fluorinated polymer (b1) and a solvent (b3), and then, applying the coating fluid (β) on the resin layer (A) to form a coating film (B1), followed by predrying.

### (Solvent (b3))

As the solvent (b3), it is preferred to use a fluorinated organic solvent which dissolves the fluorinated polymer (b1), whereby a uniform coating fluid (β) can be obtained. Further, a fluorinated organic solvent having a surface tension of at most 20 mN/m is preferred. The surface tension can be measured by a platinum plate method at 25°C.

The resin layer (A) has a high water-repelling effect, as it contains the fluorinated polymer, and it has a nature to repel the coating fluid. By applying surface treatment such as ozone treatment or plasma treatment to the resin layer (A), it is possible to improve the wettability of the resin layer (A). However, in such a case, there may be a case where the surface of the resin layer (A) is chemically modified, whereby the electret characteristics will be impaired. By using a fluorinated organic solvent having a surface tension of at most 20 mN/m as the solvent (b3), a uniform coating film (B1) can be readily formed on the resin layer (A) even if no surface treatment is applied to the resin layer (A).

As the fluorinated organic solvent having a surface tension of at most 20 mN/m, the following compounds may, for example, be mentioned.

A polyfluoro aromatic compound such as perfluorobenzene, pentafluorobenzene, 1,3-bis(trifluoromethyl)benzene or 1,4-bis(trifluoromethyl)benzene; a polyfluorotrialkylamine compound such as perfluorotributylamine or perfluorotripropylamine; a polyfluorocycloalkane compound such as perfluorodecalin, perfluorocyclohexane or perfluoro(1,3,5-trimethylcyclohexane); a polyfluoro cyclic ether compound such as perfluoro(2-butyltetrahydrofuran); a perfluoropolyether;
a polyfluoroalkane compound such as perfluorohexane, perfluorooctane, perfluorodecane, perfluorododecane, perfluoro(2,7-dimethyloctane), 1,1,2-trichloro-1,2,2-trifluoroethane, 1,1,1-trichloro-2,2,2-trifluoroethane, 1,3-dichloro-1,1,2,2,3-pentafluoropropane, 1,1,1,3-tetrachloro-2,2,3,3-tetrafluoropropane, 1,1,3,4-tetrachloro-1,2,2,3,4,4-hexafluorobutane, perfluoro(1,2-dimethylhexane), perfluoro(1,3-dimethylhexane), 1,1,2,2,3,3,5,5,5-decafluoropentane, 1,1,1,2,2,3,3,4,4,5,5,6,6-tridecafluorohexane, 1,1,1,2,2,3,3,4,4,5,5,6,6,7,7,8,8-heptadecafluorooctane, 1,1,1,2,2,3,3,4,4,5,5,6,6,7,7,8,8,9,9,10,10-henicosafluorodecane, 1,1,1,2,2,3,3,4,4-nonafluorohexane, 1,1,1,2,2,3,3,4,4,5,5,6,6-tridecafluorooctane, 1,1,1,2,2,3,3,4,4,5,5,6,6,7,7,8,8-heptadecafluorodecane, 1,1,1,2,3,4,5,5,5-nonafluoro-4-(trifluoromethyl)pentane, 1,1,1,2,2,3,5,5,5-nonafluoro-4-(trifluoromethyl)pentane, 3,3-dichloro-1,1,1,2,2-pentafluoropropane or 1,3-dichloro-1,1,2,2,3-pentafluoropropane;
a hydrofluoro ether such as (CF₃)₂CFCF(OCH₃)CF₂CF₃, and a hydrofluorocarbon such as (CF₃)C₅F₁₀C₂H₅.

As the solvent (b3), perfluorooctane, perfluorotributylamine and perfluorotripropylamine are particularly preferred.

As the solvent (b3), one type may be used alone, or two or more types may be used in combination.

The content of the fluorinated polymer (b1) in the coating fluid (β) is preferably from 0.1 to 30 mass%, more preferably from 0.5 to 20 mass%.

Further, the solid content concentration in the coating fluid (β) may suitably be set depending upon the thickness of the resin layer (B) to be formed, and it is preferably from 0.1 to 30 mass%, particularly preferably from 0.5 to 20 mass%.

The method for applying the coating fluid (β) on the resin layer (A) is the same as the preferred modes of the coating method in step (X1).

The temperature of the coating fluid (β) at the time of coating is preferably from 10 to 30°C, particularly preferably from 20 to 25°C, although it may vary depending upon the composition of the coating fluid (β). When the temperature is at least the lower limit value within the above range, a uniform coating film (B1) can be formed without dew condensation or precipitation. When the temperature is at most the upper limit value within the above range, vaporization of the solvent (b3) tends to be less likely, and the possibility of formation of air bubbles or the like tends to be small.

The shape and size of the coating film (B1) may suitably be set depending upon the shape and size of the desired electret.

In order to make the thickness of the resin layer (B) after baking to be from 0.1 to 10µm, preferably from 2 to 10 µm, the thickness of the coating film (B1) is made to be from 2 to 8 µm, preferably from 2 to 7 µm.

In the predrying, the solvent (b3) in the coating film (B1) should be dissipated as far as possible for predrying. By such predrying, it is possible to prevent deficiencies such as bubbling, surface roughening, non-uniformity, etc. in the resin layer (B) after baking in step (X4).

A preferred mode of the predrying temperature of the coating film (B1) is the same as the preferred mode of the predrying temperature in step (X1).

### (Step (X4))

Step (X4) is a step of baking the predried coating film (B1) to form a laminate having the resin layer (A) and the resin layer (B) directly laminated on the substrate. After the baking, the laminate is cooled to ordinary temperature.

The baking temperature is preferably from 100 to 300°C, more preferably from 130 to 300°C, particularly preferably from 140 to 300°C. When the baking temperature is at least the lower limit value within the above range, the solvent (b3) can be completely removed. When it is at most the upper limit value within the above range, it is possible to prevent decomposition of the respective components in the resin layer (A) and the resin layer (B).

The baking time is preferably from 0.5 to 5 hours, particularly preferably from 0.5 to 3 hours. When the baking time is at least the lower limit value within the above range, the amount of the remaining solvent can be made smaller. When it is at most the upper limit value within the above range, the production efficiency will be improved. Further, in order to obtain high adhesion and improvement in the production efficiency, final baking may further be carried out.

The atmosphere during the baking may be in an inert gas or in air.

The cooling may be annealing or quenching, but annealing is preferred. The cooling rate is preferably from 5 to 10°C /min. The cooling may be carried out by means of a cooling device, or by leaving the resin layer to stand still for natural cooling. With a view to stabilizing the state (such as the surface smoothness, the uniformity of the film thickness, etc.) of the resin layer (B), it is preferred to carry out the cooling by means of a cooling device.

Further, steps (X3) and (X4) may be repeated plural times to form the resin layer (B).

### (Step (X5))

Step (X5) is a step of injecting an electric charge to the laminate to form an electret.

As a method for injecting an electric charge to the laminate, any method may be employed without selecting the means, so long as it is a common method for charging an insulating material. For example, it is possible to apply e.g. a corona discharge method disclosed in e.g. G.M. Sessler, Electrets Third Edition, pp20, Chapter 2.2 "Charging and Polarizing Methods" (Laplacian Press, 1998), or an electron beam bombardment method, an ion beam bombardment method, a radiation method, a light irradiation method, a contact charging method or a liquid contact charging method. Among them, a corona discharge method or an electron beam bombardment method is preferred, since irradiation is thereby possible by a simple device.

The temperature at the time of injecting an electric charge is preferably at least the glass transition temperature of the fluorinated polymer (a1) and the fluorinated polymer (b1), since the stability of the electric charge to be maintained after the injection will be thereby improved, and it is particularly preferably within a temperature range of from a temperature higher by 10°C than the glass transition temperature to a temperature higher by 20°C than the glass transition temperature.

Further, with respect to the voltage to be applied at the time of injecting an electric charge, it is preferred to apply a high voltage so long as it is lower than the insulation breakdown voltage of the resin layer (A) and the resin layer (B). Specifically, it is preferably from ±6 to ±30 kV, particularly preferably from ±8 to ±15 kV. Further, the fluorinated polymer (a1) and the fluorinated polymer (b1) to be used for the resin layer (A) and the resin layer (B), respectively, are able to maintain a negative charge more stably than a positive charge, and therefore, it is particularly preferred to apply a voltage of from -8 to -15 kV.

After the injection of an electric charge, the substrate may be peeled off, and the electret may be bonded to e.g. another substrate for use.

The process for producing an electret in the present invention is not limited to a process wherein the steps (X1), (X2), (X3), (X4) and (X5) are carried out in this order. For example, preparation of the coating fluid (β) in step (X3) may be carried out prior to step (X3).

In a case where the fluorinated polymer (a1) and the fluorinated polymer (b1) are ETFE, preferred solvents and modes other than the above mentioned modes may be ones disclosed in WO2010/044421 and WO2010/044425.

The process for producing an electret in the present invention may be a process comprising e.g. the following steps (Y1) to (Y6):
(Y1) a step of preparing a coating fluid (α),
(Y2) a step of applying the coating fluid (α) onto a substrate to form a coating film (A1), followed by predrying,
(Y3) a step of preparing a coating fluid (β),
(Y4) a step of applying the coating fluid (β) onto the predried coating film (A1) to form a coating film (B1), followed by predrying,
(Y5) a step of baking the predried coating film (A1) and the predried coating film (B1) to form a laminate having the resin layer (A) and the resin layer (B) directly laminated on the substrate, and
(Y6) a step of injecting an electric charge to the laminate.

The above process for producing an electret in the present invention is not limited to a process wherein the steps (Y1), (Y2), (Y3), (Y4), (Y5) and (Y6) are carried out in this order. For example, preparation of the coating fluid (β) in step (Y3) may be carried out prior to step (Y1).

### [Electrostatic induction-type conversion device]

The electret of the present invention is useful for an electrostatic induction-type conversion device to covert electric energy and kinetic energy. The electrostatic induction-type conversion device of the present invention is provided with the electret of the present invention which has a high charge density and an excellent moisture-proof property and which has a good stability of the charge density under a high temperature and humidity condition, and thus has such features that deterioration of properties is less likely to occur, and dependence of the properties on the environment is small.

The electrostatic induction-type conversion device of the present invention may, for example, be a vibration-type power-generating unit, a microphone, a speaker, an actuator or a sensor. The structure of such an electrostatic induction-type conversion device may be the same as a conventional one except that as the electret, the electret of the present invention is used.

Fig. 2 is a perspective view illustrating one embodiment of the electrostatic induction-type conversion device of the present invention. As shown in this embodiment, the electrostatic induction-type conversion device of the present invention is preferably in such a form that the electrets are patterned.

As shown in Fig. 2, the electrostatic induction-type conversion device 1 comprises a first base material 30 having plural line-form base electrodes 34 formed with predetermined spaces on the surface of a base material main body 32 made of an insulating material so that their longitudinal direction intersects with the direction (i.e. the direction of arrow in the Fig.) in which a second base material 40 moves; the second base material 40 disposed substantially in parallel with and with a predetermined distance from the first base material 30 so as to be able to reciprocate (or vibrate) in the direction of arrow in the Fig. and having plural line-form counter electrodes 44 formed with predetermined spaces on the surface, on the base material 30 side, of a base material main body 42 made of an insulating material so that their longitudinal direction intersects with the direction (i.e. the direction of arrow in the Fig.) in which the second base material 40 moves; electrets 10 formed in a pattern corresponding to the base electrodes 34 to cover the base electrodes 34 on the surface of the first base material 30 and each having an electric charge injected to a laminate having a resin layer (A) and a resin layer (B) directly laminated; and wirings (not shown) for electrically connecting the base electrodes 34 and the counter electrodes 44 and having loads (not shown) provided on the way.

The base material main body 32 of the first main material 30 and the base material main body 42 of the second main material 40 are made of an insulating material such as an organic polymer material, such as polyethylene terephthalate, polyimide, polycarbonate or an acrylic resin.

With the electrostatic induction-type conversion device 1, an electrical power is generated by letting the second base material 40 reciprocate (or vibrate) substantially horizontally in the direction of arrow in the Fig. That is, by the vibration, the position of the second base material 40 to the first base material 30 relatively moves, whereby the overlapping area between the electrets 10 having an electric charge injected to the coating films and the counter electrodes 44 located at the opposing positions changes. At the overlapping portion between the electrets 10 and the counter electrodes 44, by the electric charge in the electrets 10, an electric charge having a polarity inverse to the electric charge in the electrets 10 will be electrostatically induced to the counter electrodes 44. Whereas, at a portion where the electrets 10 and the counter electrodes 44 are not overlapped, an inverse electric charge opposing to the previously induced electric charge disappears, and an electric current flows to the load to cancel out a potential difference from an external load (not shown). Repetition of this cycle is taken out as waves of voltage to obtain an electric energy. Thus, a kinetic energy is converted to an electric energy.

### EXAMPLES

Now, the present invention will be described in detail with reference to Examples, but it should be understood that the present invention is by no means restricted by the following description. Examples 1 to 3 and 9 are Working Examples of the present invention and Examples 4 to 8 are Comparative Examples.

Further, a mass average molecular weight (Mw) of a fluorinated polymer is a value calculated from a measured intrinsic viscosity.

Measurement of the surface tension of a solvent (b3) was carried out by a platinum method at 25°C by means of a high performance surface tension meter DY-300, manufactured by Kyowa Interface Science Co., Ltd.

### [Production Example 1: Production of fluorinated polymer 1]

45 g of perfluorobutenyl vinyl ether (CF₂=CFOCF₂CF₂CF=CF₂), 240 g of ion-exchanged water, 7 g of methanol and 0.1 g of a diisopropyl peroxydicarbonate powder ((CH₃)₂CHOCOO)₂) as a polymerization initiator were put into an autoclave made of pressure-resistant glass and having an internal capacity of 500 mL. The interior of the system was flushed three times with nitrogen, and then, suspension polymerization was carried out at 40°C for 23 hours to obtain 39 g of a fluorinated polymer 1. The IR spectrum of the fluorinated polymer 1 was measured, whereby there were no characteristic absorptions in the vicinity of 1,660 cm⁻¹ and 1,840 cm⁻¹ attributable to the double bonds present in the monomer.

### [Production Example 2: Production of fluorinated polymer 2]

The fluorinated polymer 1 obtained in Production Example 1 was subjected to thermal treatment at 250°C for 8 hours in air and then immersed in water to obtain a fluorinated polymer 2 having a carboxy group (-COOH group) at a terminal of the main chain. As a result of measurement of the IR spectrum of a compression-molded film of the fluorinated polymer 2, characteristic absorptions at 1,775 cm⁻¹ and 1,810 cm⁻¹ attributable to the -COOH group were observed.

Further, the intrinsic viscosity [η] (30°C) of the fluorinated polymer 2 was measured by an intrinsic viscosity-measuring device (the same applies hereinafter) and found to be 0.32 dl/g, and the mass average molecular weight (Mw) of the fluorinated polymer 2 quantified from the result was 287,000.

The fluorinated polymer 2 was subjected to a differential scanning calorimetry (DSC), whereby the glass transition temperature (Tg) of the fluorinated polymer 2 was 108°C.

### [Production Example 3: Production of fluorinated polymer 3]

The fluorinated polymer 1 obtained in Production Example 1 was subjected to thermal treatment at 250°C for 8 hours in air and then dissolved in a perfluorotributylamine solvent to be 9 mass%. Then, the obtained solution was put into an autoclave, and the interior of the autoclave was filled with fluorine gas and nitrogen gas, followed by thermal treatment at 200°C for 30 hours to obtain a fluorinated polymer 3.

The IR spectrum of a compression-molded film of each of the fluorinated polymer 1 and the fluorinated polymer 3 was measured. As a result, while a characteristic absorption at 1,890 cm⁻¹ attributable to the -COF group at the terminal of the main chain was observed in the fluorinated polymer 1, no characteristic absorption at 1,890 cm⁻¹ was observed in the fluorinated polymer 3.

Further, the fluorinated polymer 3 was subjected to a differential scanning calorimetry (DSC), whereby the glass transition temperature (Tg) of the fluorinated polymer 3 was 108°C.

### [Production Example 4: Production of fluorinated polymer 4]

The fluorinated polymer 1 obtained in Production Example 1 was subjected to thermal treatment at 250°C for 8 hours in air and then immersed in methanol to obtain a fluorinated polymer 4 having a methoxycarbonyl group (-COOCH₃ group) at a terminal of the main chain.

As a result of measurement of the IR spectrum of a compression-molded film of the fluorinated polymer 4, a characteristic absorption at 1,795 cm⁻¹ attributable to the-COOCH₃ group was observed.

Further, the intrinsic viscosity [η] (30°C) of the fluorinated polymer 4 was found to be 0.24 dl/g, and the mass average molecular weight (Mw) of the fluorinated polymer 4 quantified from the result was 177,000.

### [Preparation Example 1: Preparation of coating fluid P1]

In perfluorotributylamine (corresponding to solvent (b3), surface tension: 16 mN/m), the above fluorinated polymer 2 was dissolved so that its concentration became 12 mass%, to obtain a coating fluid P1.

### [Preparation Example 2: Preparation of coating fluid P2]

A coating fluid P2 was obtained in the same manner as in Preparation Example 1 except that the concentration of the fluorinated polymer 2 was made to be 9 mass%.

### [Preparation Example 3: Preparation of coating fluid P3]

A coating fluid P3 was obtained in the same manner as in Preparation Example 2 except that the fluorinated polymer 3 was used instead of the fluorinated polymer 2.

### [Preparation Example 4: Preparation of coating fluid P4]

A coating fluid P4 was obtained in the same manner as in Preparation Example 2 except that the fluorinated polymer 4 was used instead of the fluorinated polymer 2.

### [Preparation Example 5: Preparation of coating fluid P5]

In cyclohexanone (corresponding to solvent (b3), surface tension: 35 mN/m), polyimide (BZ Series, manufactured by AZ Electronics) was dissolved so that its concentration became 10 mass%, to obtain a coating fluid P5.

### [Preparation Example 6: Preparation of coating fluid P6]

0.2 g of γ-aminopropylmethyldiethoxysilane was dissolved in 4.8 g of 2-(perfluorohexyl) ethanol to prepare a silane coupling agent solution, and the silane coupling agent solution and 95 g of the above coating fluid P1 were mixed to obtain a uniform coating fluid P6.

### [Preparation Example 7: Preparation of coating fluid P7]

0.2 g of γ-aminopropyltriethoxysilane was dissolved in 4.8 g of 2-(perfluorohexyl) ethanol to prepare a silane coupling agent solution, and the silane coupling agent solution and 95 g of the above coating fluid P4 were mixed and heated at 50°C for 5 hours to let a part of γ-aminopropyltriethoxysilane react with the fluorianated polymer 4, thereby to obtain a uniform coating fluid P7.

### [Example 1]

### (Step (X1))

The coating fluid P6 was applied onto a copper substrate (3 cm square, thickness: 300 µm) by a spin coating method to form a coating film (A1), followed by predrying at 100°C for 1 hour. This operation was repeated three times to form a three layered coating film.

### (Step (X2))

The coating film (A1) was subjected to baking at 300°C for 1 hour to form a resin layer (A) having a thickness of 15 µm.

### (Step (X3))

The coating fluid P2 was applied onto the above resin layer (A) by a spin coating method to form a coating film (B1), followed by predrying at 100°C for 30 minutes.

### (Step (X4))

The above predried coating film (B1) was subjected to baking at 150°C for 2 hours to form a uniform resin layer (B) having a thickness of 5 µm thereby to obtain a laminate having the resin layer (A) and the resin layer (B) directly laminated.

### (Step (X5))

To the above laminate, injection of an electric charge was carried out by means of a corona charging equipment, of which a schematic diagram is shown in Fig. 3, to obtain an electret.

This corona charging equipment is designed so that by using the above copper substrate provided with the laminate (the substrate 20 provided with the laminate 10A) as an electrode, a high voltage can be applied between a corona needle 54 and the substrate 20 by a DC high voltage power source 52 (HAR-20R5, manufactured by Matsusada Precision Inc.). Further, it is designed that to a grid 56, a grid voltage can be applied from a grid power source 58. It is thereby designed that negative ions discharged from the corona needle 54 are homogenized by the grid 56 and then showered down on the laminate 10A, whereby electric charge is injected.

Further, in order to stabilize the electric charge injected to the laminate 10A, it is designed that by a hotplate 60, the laminate 10A can be heated to a temperature of at least the glass transition temperature during the injection of an electric charge. Here, 50 is an ammeter.

The heating temperature of the laminate 10A by the hotplate 60 was adjusted to 120°C which is higher by 12°C than the glass transition temperature (Tg: 108°C) of the fluorinated polymer 2 used.

For the injection of an electric charge, a high voltage of -8 kV was applied for 3 minutes between the corona needle 54 and the substrate 20 in air. Further, during the period, the grid voltage was set to be -1,100 V.

### [Evaluations]

With respect to the obtained electret, evaluations of the initial surface potential, the charge retention property, the thickness uniformity and the adhesion are carried out. The results are shown in Table 1.

### (1) Initial surface potential

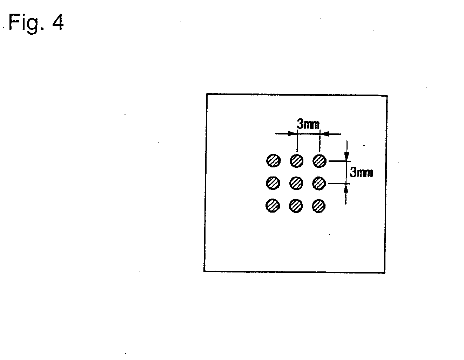

The electret having an electric charge injected, is adjusted to ordinary temperature (25°C), and then, by means of a surface potential meter (Model 279, manufactured by Monroe Electronics), the surface potential is measured. For the surface potential, surface potentials at 9 measuring points of the electret (set in a lattice form for every 3 mm from the center of the electret surface, see Fig. 4) are measured, and an average value thereof is taken as the surface potential.

In evaluation of the initial surface potential, at least 1,000 V by absolute value is rated to be "○ (good)" and less than 1,000 V by absolute value is rated as "× (no-good)".

### (2) Charge retention property

The electret is left to stand still for 200 hours in a constant temperature and humidity tank at 20°C under a humidity of 60% and then adjusted to ordinary temperature (25°C), whereupon the surface potential is measured by the same method as in (1). Then, it is further left to stand still for 200 hours in a constant temperature and humidity tank at 85°C under a humidity of 85% and then adjusted to ordinary temperature (25°C), whereupon the surface potential is measured by the same method as in (1).

From the obtained results, the remaining ratio of the surface potential after being left to stand still at 20°C under a humidity of 60% and the remaining ratio of the surface potential after being left to stand still at 85°C under a humidity of 85% are, respectively, calculated when the initial surface potential is taken as 100.

In evaluation of the remaining ratio of the surface potential after being left to stand still at 20°C under a humidity of 60%, at least 80 is rated to be "○ (good)" and less than 80 is rated as "× (no-good)".

In evaluation of the remaining ratio of the surface potential after being left to stand still at 85°C under a humidity of 85%, at least 80 is rated to be "○ (good)" and less than 80 is rated as "× (no-good)".

### (3) Thickness uniformity of electret

At 9 measuring points of the electret (set in a lattice form for every 3 mm from the center of the electret surface, see Fig. 4), the thicknesses are measured by means of a thickness-measuring device by spectral interference.

When the thicknesses at the 9 points are within a range of ±10%, the uniformity is rated to be "○ (good)" and when they are not within a range of ±10%, the uniformity is rated as "× (no-good)".

### (4) Adhesion

With respect to the electret, the adhesion is evaluated by a cross-cut adhesion test based on JIS 5600. Specifically, using a cross-cut guide, the air side (the side opposite to the copper substrate) of the electret is cut in a lattice pattern by a cutter, followed by peeling 10 times with an adhesive tape. A fluorescent light is applied to the peeled portion, whereby a case where light scattering due to peeling of the resin layer (B) is not observed, is rated to be "○ (good)" and a case where such light scattering is observed, is rated to be "× (no-good)".

### [Examples 2 and 3]

An electret was produced in the same manner as in Example 1 except that the coating fluid as identified in Table 1 was used in step (X3), and evaluated in the same manner. The results are shown in Table 1.

### [Example 4]

An electret was produced in the same manner as in Example 1 except that steps (X3) and (X4) were not carried out, and evaluated in the same manner. The results are shown in Table 1.

### [Example 5]

An electret was produced in the same manner as in Example 1 except that the coating fluid as identified in Table 1 was used in step (X1), and steps (X3) and (X4) were not carried out, and evaluated in the same manner. The results are shown in Table 1.

### [Example 6]

An electret was produced in the same manner as in Example 1 except that after step (X2), the surface of the resin layer (A) was subjected to surface treatment with nitrogen gas for 2 minutes under a condition of 4Pa and 80W by means of RIE (reactive ion etching)-10NR device, manufactured by SAMCO, and then, in step (X3), a coating fluid as identified in Table 1 was used, and the evaluation was carried out in the same manner. The results are shown in Table 1.

### [Example 7]

An electret was produced in the same manner as in Example 1 except that the coating fluid as identified in Table 1 was used in step (X3), and evaluated in the same manner. The results are shown in Table 1.

### [Example 8]

An electret was produced in the same manner as in Example 1 except that in step (X1), one layer coating was carried out to obtain 5 µm of the resin layer (A) in step (X2), and in step (X3), three-layered coating was carried out to obtain 15 µm of the resin layer (B) in step (X4). The evaluation was carried out in the same manner. The results are shown in Table 1.

### [Example 9]

An electret was produced in the same manner as in Example 1 except that the coating fluid as identified in Table 1 was used in step (X1), and evaluated in the same manner. The results are shown in Table 1.

**TABLE 1**

| | | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| Production process | Step (X1) | Type of coating fluid | P6 | P6 | P6 | P6 | P2 | P6 | P6 | P6 | P7 |
| | Surface treatment after step (X2) | | No | No | No | No | No | Yes | No | No | No |
| | Step (X3) | Type of coating fluid | P2 | P3 | P4 | - | - | P5 | P5 | P2 | P2 |
| | Total thickness of resin layer (B) to total thickness of resin layer (A) [%] | | 33 | 33 | 33 | - | - | 33 | 33 | 150 | 33 |
| Evaluation results | Initial surface voltage | | ○ | ○ | ○ | ○ | × | × | ○ | × | ○ |
| | Charge retention property | 20°C, 60%, 200h | ○ | ○ | ○ | ○ | ○ | ○ | ○ | ○ | ○ |
| | | 85°C, 85%, 200h | ○ | ○ | ○ | × | ○ | × | × | ○ | ○ |
| | Thickness uniformity of electret | | ○ | ○ | ○ | ○ | ○ | ○ | × | ○ | ○ |
| | Adhesion | | ○ | ○ | ○ | - | - | ○ | × | ○ | ○ |

As shown in Table 1, the electrets in Examples 1 to 3 and 9 have high initial surface potentials and high charge densities. Further, the electrets are excellent in the thickness uniformity and also excellent in the adhesion between the resin layer (A) and the resin layer (B). And the remaining ratios of the surface potentials after being left to stand still at 20°C under a humidity of 60% and after being left to stand still at 85°C under a humidity of 85% are high, and the stability of the electric charge under a high temperature and high humidity condition is also excellent.

Whereas, the electret in Example 4 has no resin layer (B) laminated on the resin layer (A), whereby the remaining ratio of the surface potential after being left to stand still at 85°C under a humidity of 85% is substantially deteriorated, and the stability of the electric charge under a high temperature and high humidity condition is inferior.

The electret in Example 5 has a low initial surface potential and a low charge density, since a coating fluid containing no silane coupling agent (a2) was used.

The electret in Example 6 has a low initial surface potential and a low charge density, since the resin layer (A) was modified by the surface treatment applied to the resin layer (A) for the purpose of laminating a resin layer containing polyimide on the resin layer (A) with excellent adhesion.

The electret in Example 7 is inferior in the adhesion between the resin layer (A) and the resin layer containing polyimide and in the thickness uniformity of the electret, since no surface treatment was applied to the resin layer (A) and the solvent used in step (X3) was a solvent having a surface tension exceeding 20 mN/m. Further, the stability of the electric charge under a high temperature and humidity condition is deteriorated due to an influence of penetration of moisture between the resin layer (A) and the resin layer containing polyimide.

The electret in Example 8 is inferior in the initial surface potential, since the total thickness of the resin layer (B) exceeded 55% of the total thickness of the resin layer (A).

### INDUSTRIAL APPLICABILITY

The electret of the present invention is useful for e.g. an electrostatic induction-type conversion device (such as a power generating unit, a microphone, a speaker, an actuator or a sensor), a surface component for a cleaning roller to be used for an image-forming device (such as a copying machine or a printer), an image display member to be used for an image display device such as an electron paper, a piezoelectric electret film to measure the pressure against a printing plate of an ink-applying roller in a printing machine wherein the ink-applying roller is pressed against the printing plate, a dust-collecting filter, etc.

The entire disclosure of Japanese Patent Application No. 2011-165334 filed on July 28, 2011 including specification, claims, drawings and summary is incorporated herein by reference in its entirety.

### REFERENCE SYMBOLS

1: Electrostatic induction-type conversion device
10: Electret
10A: Laminate
12: Resin layer (A)
14: Resin layer (B)
20: Substrate
30: First base material
32: Base material main body
34: Base electrode
40: Second base material
42: Base material main body
44: Counter electrode
50: Ammeter
52: DC high voltage power source
54: Corona needle
56: Grid
58: Power source for grid
60: Hot plate

## Claims

1. An electret having an electric charge injected to a laminate having a resin layer (A) and a resin layer (B) laminated directly on the resin layer (A), wherein
the resin layer (A) contains a reaction product of a fluorinated polymer with a silane coupling agent,
the resin layer (B) does not contain a reaction product of a fluorinated polymer with a silane coupling agent and contains a fluorinated polymer,
the resin layer (B) is disposed as the outermost layer so as to be in contact with air, and
the total thickness of the resin layer (B) is from 5 to 55% of the total thickness of the resin layer (A).

2. The electret according to Claim 1, wherein the silane coupling agent is a silane coupling agent having an amino group.

3. The electret according to Claim 1 or 2, wherein the silane coupling agent is at least one member selected from the group consisting of γ-aminopropylmethyldiethoxysilane, γ-aminopropylmethyldimethoxysilane, N-(β-aminoethyl)-γ-aminopropylmethyldimethoxysilane, N-(β-aminoethyl)-γ-aminopropylmethyldiethoxysilane, γ-aminopropyltrimethoxysilane, γ-aminopropyltriethoxysilane, N-(β-aminoethyl)-γ-aminopropyltrimethoxysilane, N-(β-aminoethyl)-γ-aminopropyltriethoxysilane and aminophenyltrimethoxysilane.

4. The electret according to any one of Claims 1 to 3, wherein the fluorinated polymer to form the reaction product contained in the resin layer (A) is a fluorinated polymer having at least one member selected from the group consisting of a carboxy group and its salt (-COOM¹, wherein M¹ is a metal atom or atomic group capable of forming a salt with a carboxy group), an alkoxycarbonyl group, an acid anhydride group formed by dehydration condensation of two carboxy groups in one molecule, and an acyl group.

5. The electret according to any one of Claims 1 to 4, wherein the fluorinated polymer to form the reaction product contained in the resin layer (A) is a fluorinated polymer having an alicyclic structure in its main chain.

6. The electret according to any one of Claims 1 to 5, wherein the fluorinated polymer contained in the resin layer (B) is a fluorinated polymer having an alicyclic structure in its main chain.

7. The electret according to any one of Claims 1 to 6, wherein the fluorinated polymer to form the reaction product contained in the resin layer (A) and the fluorinated polymer contained in the resin layer (B) are the same type of fluorinated polymer.

8. A process for producing an electret comprising the following steps (X1) to (X5):
(X1) a step of applying a coating fluid containing a fluorinated polymer, a silane coupling agent and a solvent onto a substrate to form a coating film (A1), followed by predrying,
(X2) a step of baking the predried coating film (A1) to form a resin layer (A),
(X3) a step of applying a coating fluid not containing a silane coupling agent and containing a fluorinated polymer and a solvent onto the resin layer (A) to form a coating film (B1), followed by predrying,
(X4) a step of baking the predried coating film (B1) to form a resin layer (B) thereby to form a laminate having the resin layer (A) and the resin layer (B) directly laminated on the substrate, and
(X5) a step of injecting an electric charge to the laminate.

9. The process for producing an electret according to Claim 8, wherein the silane coupling agent is a silane coupling agent having an amino group.

10. The process for producing an electret according to Claim 8 or 9, wherein the fluorinated polymer to be used in the step (X1) is a fluorinated polymer having at least one member selected from the group consisting of a carboxy group and its salt (-COOM¹, wherein M¹ is a metal atom or atomic group capable of forming a salt with a carboxy group), an alkoxycarbonyl group, an acid anhydride group formed by dehydration condensation of two carboxy groups in one molecule, and an acyl group.

11. The process for producing an electret according to any one of Claims 8 to 10, wherein the fluorinated polymer to be used in the step (X1) is a fluorinated polymer having an alicyclic structure in its main chain.

12. The process for producing an electret according to any one of Claims 8 to 11, wherein the fluorinated polymer to be used in the step (X1) and the fluorinated polymer to be used in the step (X3) are the same type of fluorinated polymer.

13. The process for producing an electret according to any one of Claims 8 to 12, wherein in the step (X1), the proportion of the silane coupling agent to the total amount of the fluorinated polymer and the silane coupling agent, is from 0.1 to 20 mass%.

14. The process for producing an electret according to any one of Claims 8 to 13, wherein the solvent to be used in the step (X3) is a fluorinated organic solvent having a surface tension of at most 20 mN/m.

15. An electrostatic induction-type conversion device provided with the electret as defined in any one of Claims 1 to 7.
